# EUROPEAN PATENT APPLICATION

(11) **EP 4 842 024 A1**
(43) Date of publication of application: **18.11.2026**
(21) Application number: 24915942.7
(22) Date of filing: 09.01.2024
(51) Int. Cl.: H04W 8/14

(54) **COMMUNICATION METHODS AND APPARATUSES, AND CORE NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); THOMAS, Emmanuel, Beijing 100085 (CN)
(74) Representative: Hersina, Günter
(86) International application number: PCT/CN2024/071428
(87) International publication number: WO 2025/147861

(57) **Abstract**

The present disclosure relates to communication methods and apparatuses, and a core network device, a communication system and a storage medium. A method comprises: determining first information, wherein the first information is used for requesting that a first rule is determined, and the first rule is used for traffic mapping of a multiplexed data flow of a first service. By means of the solution of the present disclosure, the support for different QoS characteristics of a multiplexed data flow is realized.

## Description

### TECHNICAL FIELD

The present disclosure relates to the field of communication technologies, and more particularly to a communication method and apparatus, a core network device, a communication system and a storage medium.

### BACKGROUND

In communication technologies such as 5th generation mobile networks (5G), mobile media services, online extended reality (XR), online games, and video-based remote control of machines or drones, etc. are expected to contribute increasing traffic to communication networks.

Currently, due to features of high throughput, low latency, and high reliability requirements of eXtended reality (XRM) and interactive media services, it is necessary to comprehensively consider quality of service (QoS) characteristics of different service data flows (SDFs) within a service.

### SUMMARY

The embodiments of the present disclosure provide a communication method and apparatus, a core network device, a communication system, and a storage medium to provide support for different quality of service (QoS) characteristics of multiplexed data flows.

According to a first aspect of the embodiments of the present disclosure, a communication method is provided. The communication method is performed by a first core network device. The above communication method includes: determining first information, in which the first information is configured to request to determine a first rule, and the first rule is configured for traffic mapping of a multiplexed data flow of a first service.

According to a second aspect of the embodiments of the present disclosure, a communication method is provided. The communication method is performed by a second core network device. The above communication method includes: sending first information to a first core network device, in which the first information is configured to request to determine a first rule, and the first rule is configured for traffic mapping of a multiplexed data flow of a first service.

According to a third aspect of the embodiments of the present disclosure, a communication method is provided. The communication method is performed by a third core network device. The above communication method includes: receiving second information sent by the third core network device, in which the second information includes at least one of: a first rule, configured for traffic mapping of a multiplexed data flow of a first service; indication information, configured to indicate whether to use the multiplexed data flow; or requirement information, configured to indicate a mapping requirement for the multiplexed data flow.

According to a fourth aspect of the embodiments of the present disclosure, a communication method is provided. The communication method is performed by a fourth core network device. The above communication method includes: determining, according to a second rule, a mapping of a multiplexed data flow of a first service to a QoS flow, in which the second rule is configured for traffic mapping of the multiplexed data flow.

According to a fifth aspect of the embodiments of the present disclosure, a communication method is provided. The communication method is performed by a core network. The core network includes a first core network device and a third core network device. The above communication method includes: sending, by the first core network device, second information to the third core network device, in which the second information includes at least one of: a first rule, configured for traffic mapping of a multiplexed data flow of a first service; indication information, configured to indicate whether to use the multiplexed data flow; or requirement information, configured to indicate a mapping requirement for the multiplexed data flow.

According to a sixth aspect of the embodiments of the present disclosure, a first core network device is provided. The first core network device includes a transceiver module, configured to obtain first information, in which the first information is configured to request to determine a first rule, and the first rule is configured for traffic mapping of a multiplexed data flow of a first service.

According to a seventh aspect of the embodiments of the present disclosure, a second core network device is provided. The second core network device includes a transceiver module, configured to send first information, in which the first information is configured to request to determine a first rule, and the first rule is configured for traffic mapping of a multiplexed data flow of a first service.

According to an eighth aspect of the embodiments of the present disclosure, a third core network device is provided. The third core network device includes: a transceiver module, configured to receive second information, in which the second information includes at least one of: a first rule, configured for traffic mapping of a multiplexed data flow of a first service; indication information, configured to indicate whether to use the multiplexed data flow; or requirement information, configured to indicate a mapping requirement for the multiplexed data flow.

According to a ninth aspect of the embodiments of the present disclosure, a fourth core network device is provided. The fourth core network device includes: a processing module, configured to determine, according to a second rule, a mapping of a multiplexed data flow of a first service to a QoS flow, in which the second rule is configured for traffic mapping of the multiplexed data flow.

According to a tenth aspect of the embodiments of the present disclosure, a communication apparatus is provided. The communication apparatus includes: one or more processors and a memory storing instructions. When executed by the communication apparatus, the instructions cause the communication apparatus to implement the communication method according to the first aspect.

According to an eleventh aspect of the embodiments of the present disclosure, a communication apparatus is provided. The communication apparatus includes: one or more processors and a memory storing instructions. When executed by the communication apparatus, the instructions cause the communication apparatus to implement the communication method according to the second aspect.

According to a twelfth aspect of the embodiments of the present disclosure, a communication apparatus is provided. The communication apparatus includes: one or more processors and a memory storing instructions. When executed by the communication apparatus, the instructions cause the communication apparatus to implement the communication method according to the third aspect.

According to a thirteenth aspect of the embodiments of the present disclosure, a communication apparatus is provided. The communication apparatus includes: one or more processors and a memory storing instructions. When executed by the communication apparatus, the instructions cause the communication apparatus to implement the communication method according to the fourth aspect.

According to a fourteenth aspect of the embodiments of the present disclosure, a communication apparatus is provided. The communication apparatus includes: one or more processors and a memory storing instructions. When executed by the communication apparatus, the instructions cause the communication apparatus to implement the communication method according to the fifth aspect.

According to a fifteenth aspect of the embodiments of the present disclosure, a communication system is provided. The communication system includes a first core network device and a second core network device. The first core network device is configured to implement the communication method according to the first aspect. The second core network device is configured to implement the communication method according to the second aspect.

According to a sixteenth aspect of the embodiments of the present disclosure, a storage medium is provided. The storage medium stores instructions that, when run on a communication device, cause the communication device to perform the communication method according to any one of the first to fifth aspects.

According to a seventeenth aspect of the embodiments of the present disclosure, a program product is provided. When executed by a communication device, the program product causes the communication device to perform the communication method according to any one of the first to fifth aspects.

According to an eighteenth aspect of the embodiments of the present disclosure, a computer program is provided. When run on a computer, the computer program causes the computer to perform the communication method according to any one of the first to fifth aspects.

According to a nineteenth aspect of the embodiments of the present disclosure, a chip or chip system is provided. The chip or chip system includes a processing circuit. The processing circuit is configured to perform the communication method according to any one of the first to fifth aspects.

Through the embodiments of the present disclosure, each data flow in the multiplexed data flow may be mapped to a corresponding QoS flow.

It should be understood that the above general description and the following detailed description are illustrative and explanatory only, and do not constitute a limitation on the embodiments of the present disclosure.

### BRIEF DESCRIPTION OF THE DRAWINGS

To more clearly illustrate the technical solution in the embodiments of the present disclosure, description is made below to accompanying drawings used for the embodiments. The accompanying drawings below are only some embodiments of the present disclosure and do not impose detailed limitations on the protection scope of the present disclosure.
FIG. 1A is a schematic diagram illustrating an architecture of a communication system according to an embodiment of the present disclosure.
FIG. 1B is a schematic diagram illustrating an architecture of one implementation of a communication system according to an embodiment of the present disclosure.
FIG. 1C is a schematic diagram illustrating an architecture of another implementation of a communication system according to an embodiment of the present disclosure.
FIG. 2 is a schematic interaction diagram illustrating a communication method according to an embodiment of the present disclosure.
FIG. 3 is a flowchart illustrating a communication method according to an embodiment of the present disclosure.
FIG. 4 is a flowchart illustrating a communication method according to an embodiment of the present disclosure.
FIG. 5 is a flowchart illustrating a communication method according to an embodiment of the present disclosure.
FIG. 6 is a flowchart illustrating a communication method according to an embodiment of the present disclosure.
FIG. 7 is a schematic interaction diagram illustrating a communication method according to an embodiment of the present disclosure.
FIG. 8A is a schematic interaction diagram illustrating a communication method according to an embodiment of the present disclosure.
FIG. 8B is a schematic interaction diagram illustrating a communication method according to an embodiment of the present disclosure.
FIG. 8C is a schematic interaction diagram illustrating a communication method according to an embodiment of the present disclosure.
FIG. 8D is a flowchart illustrating a communication method according to an embodiment of the present disclosure.
FIG. 9 is a schematic interaction diagram illustrating an illustrative implementation of a communication method according to an embodiment of the present disclosure.
FIG. 10 is a block diagram illustrating a communication device according to an embodiment of the present disclosure.
FIG. 11A is a block diagram illustrating a communication device according to an embodiment of the present disclosure.
FIG. 11B is a block diagram illustrating a chip according to an embodiment of the present disclosure.

### DETAILED DESCRIPTION

The embodiments of the present disclosure provide a communication method and apparatus, a core network device, a communication system, and a storage medium.

In a first aspect, the embodiments of the present disclosure provide a communication method. The communication method is performed by a first core network device. The above communication method includes: determining first information, in which the first information is configured to request to determine a first rule, and the first rule is configured for traffic mapping of a multiplexed data flow of a first service.

In the above embodiments, the first core network device may determine the first information, and the first information is configured to request to determine the first rule. The first information may enable the first core network device to determine the first rule. The first rule is configured for the traffic mapping of the multiplexed data flow of the first service. In this way, a mapping of the multiplexed data flow of the first service to a quality of service (QoS) flow may be implemented, thereby enabling support for different QoS characteristics of the multiplexed data flow.

In combination with some embodiments of the first aspect, in some embodiments, an operation of determining the first information may include at least one of: receiving the first information sent by a second core network device; receiving the first information sent by a seventh core network device; determining the first information based on an operation and maintenance and management configuration of an operator; or determining the first information according to a local configuration.

In the above embodiments, the first information may be received from the second core network device or the seventh core network device, or may be determined according to the operation and maintenance and management configuration of the operator, or may be determined according to the local configuration. In this way, the first information may be obtained in various ways as needed, which significantly improves the flexibility of configuring the traffic mapping for the multiplexed data flow and expands an applicable scenario.

In combination with some embodiments of the first aspect, in some embodiments, the first information may include at least one of: indication information, configured to indicate whether to use the multiplexed data flow; or requirement information, configured to indicate a mapping requirement for the multiplexed data flow.

In the above embodiments, the indication information may indicate whether to use the multiplexed data flow. In addition, the requirement information may indicate the requirement for the traffic mapping of the multiplexed data flow. Thus, the traffic mapping applicable to the first rule determined based on the first information may meet the requirement.

In combination with some embodiments of the first aspect, in some embodiments, the requirement information may include at least one of: a mapping type; a mapping descriptor; or a mapping precedence.

In the above embodiments, by including one or more of: the mapping type, the mapping descriptor, or the mapping precedence in the requirement information, the indication information may clearly indicate the requirement that needs to be met for the traffic mapping of the multiplexed data flow, which may determine the corresponding traffic mapping rule.

In combination with some embodiments of the first aspect, in some embodiments, the mapping type may include at least one of: one-to-one mapping; one-to-many mapping; many-to-one mapping; or many-to-many mapping.

In the above embodiments, the mapping type may indicate various types such as the one-to-one mapping, the one-to-many mapping, the many-to-one mapping, and the many-to-many mapping. In this way, different mapping types may be used for different services and/or multiplexed data flows, thereby configuring a suitable first rule.

In combination with some embodiments of the first aspect, in some embodiments, the mapping descriptor may include at least one of: a media type; a stream dependency; a channel dependency; a layer dependency; or a synchronization dependency.

In the above embodiments, the mapping descriptor may be configured to represent different characteristics such as the media type, the stream dependency, the channel dependency, the layer dependency, and the synchronization dependency. Thus, the traffic mapping for the multiplexed data flow of the first service may be implemented by taking these different characteristics into account.

In combination with some embodiments of the first aspect, in some embodiments, the mapping precedence may include at least one of: a mapping requirement precedence; a mapping type precedence; or a mapping descriptor precedence.

In the above embodiments, when performing the traffic mapping of the multiplexed data flow, a precedence of mapping rule used may be determined based on at least one of: the mapping requirement precedence, the mapping type precedence, and the mapping descriptor precedence. Thus, different types of mapping precedence may be used for different scenarios. For example, for services with high synchronization requirements, the mapping descriptor precedence may be considered first. For another example, for services with bandwidth requirements, the mapping descriptor precedence may be considered first.

In combination with some embodiments of the first aspect, in some embodiments, the above method may further include: sending second information to a third core network device, in which the second information includes one of: the first rule; indication information, configured to indicate whether to use the multiplexed data flow; or requirement information, configured to indicate a mapping requirement for the multiplexed data flow.

In combination with some embodiments of the first aspect, in some embodiments, the above method may further include: determining the first rule according to the indication information and/or the requirement information.

In combination with some embodiments of the first aspect, in some embodiments, the above method may further include: sending the first information to a seventh core network device.

In a second aspect, the embodiments of the present disclosure provide a communication method. The communication method is performed by a second core network device. The above communication method includes: sending first information to a first core network device, in which the first information is configured to request to determine a first rule, and the first rule is configured for traffic mapping of a multiplexed data flow of a first service.

In the above embodiments, the second core network device may send the first information, and the first information is configured to request to determine the first rule. The core network device that receives the first information may determine the first rule. The first rule is configured for the traffic mapping of the multiplexed data flow of the first service. In this way, the mapping of the multiplexed data flow of the first service to the QoS flow may be implemented, thereby enabling support for different QoS characteristics of the multiplexed data flow.

In combination with some embodiments of the second aspect, in some embodiments, the first information may include at least one of: indication information, configured to indicate whether to use the multiplexed data flow; or requirement information, configured to indicate a mapping requirement for the multiplexed data flow.

In combination with some embodiments of the second aspect, in some embodiments, the requirement information may include at least one of: a mapping type; a mapping descriptor; or a mapping precedence.

In combination with some embodiments of the second aspect, in some embodiments, the mapping type may include at least one of: one-to-one mapping; one-to-many mapping; many-to-one mapping; or many-to-many mapping.

In combination with some embodiments of the second aspect, in some embodiments, the mapping descriptor may include at least one of: a media type; a stream dependency; a channel dependency; a layer dependency; or a synchronization dependency.

In combination with some embodiments of the second aspect, in some embodiments, the mapping precedence may include at least one of: a mapping requirement precedence; a mapping type precedence; or a mapping descriptor precedence.

In a third aspect, the embodiments of the present disclosure provide a communication method. The communication method is performed by a third core network device. The above communication method includes: receiving second information sent by a first core network device, in which the second information includes one of: a first rule, configured for traffic mapping of a multiplexed data flow of a first service; indication information, configured to indicate whether to use the multiplexed data flow; or requirement information, configured to indicate a mapping requirement for the multiplexed data flow.

In the above embodiments, the third core network device may receive the second information. The third core network device may obtain the first rule or information related to the first rule via the second information. In this way, the third core network device may implement the mapping of the multiplexed data flow of the first service to the QoS flow, thereby enabling support for different QoS characteristics of the multiplexed data flow.

In combination with some embodiments of the third aspect, in some embodiments, the requirement information may include at least one of: a mapping type; a mapping descriptor; or a mapping precedence.

In combination with some embodiments of the third aspect, in some embodiments, the mapping type may include at least one of: one-to-one mapping; one-to-many mapping; many-to-one mapping; or many-to-many mapping.

In combination with some embodiments of the third aspect, in some embodiments, the mapping descriptor may include at least one of: a media type; a stream dependency; a channel dependency; a layer dependency; or a synchronization dependency.

In combination with some embodiments of the third aspect, in some embodiments, the mapping precedence may include at least one of: a mapping requirement precedence; a mapping type precedence; or a mapping descriptor precedence.

In combination with some embodiments of the third aspect, in some embodiments, the first rule may be determined according to the indication information and/or the requirement information.

In combination with some embodiments of the third aspect, in some embodiments, the above method may further include: sending third information to a fourth core network device, in which the third information includes a second rule, and the second rule is configured for traffic mapping of the multiplexed data flow of the first service.

In combination with some embodiments of the third aspect, in some embodiments, the second rule may be determined according to one of: the first rule; or the indication information and/or the requirement information.

In the above embodiments, the third core network device may receive the second information. The third core network device may obtain the first rule or information related to the first rule via the second information. Subsequently, the third core network device may determine the second rule based on the first rule, or based on at least one of the indication information or the requirement information. In this way, the third core network device may implement the mapping of the multiplexed data flow of the first service to the QoS flow, thereby enabling support for different QoS characteristics of the multiplexed data flow.

In a fourth aspect, embodiments of the present disclosure provide a communication method. The communication method is performed by a fourth core network device. The above communication method includes: determining, according to a second rule, a mapping of a multiplexed data flow of a first service to a QoS flow, in which the second rule is configured for traffic mapping of the multiplexed data flow.

In the above embodiments, the fourth core network device may implement the mapping of the multiplexed data flow of the first service to the QoS flow based on the second rule. According to the second rule, the fourth core network device may map each data flow in the multiplexed data flow to a corresponding QoS flow, thereby enabling support for different QoS characteristics of the multiplexed data flow.

In combination with some embodiments of the fourth aspect, in some embodiments, the above method may further include: receiving third information sent by a third core network device, in which the third information includes a second rule, and the second rule is configured for traffic mapping of the multiplexed data flow of the first service.

In combination with some embodiments of the fourth aspect, in some embodiments, the second rule may be locally configured.

In a fifth aspect, the embodiments of the present disclosure provide a communication method. The communication method is performed by a core network. The core network includes a first core network device and a third core network device. The above communication method includes: sending, by the first core network device, second information to the third core network device, in which the second information includes at least one of: a first rule, configured for traffic mapping of a multiplexed data flow of a first service; indication information, configured to indicate whether to use the multiplexed data flow; or requirement information, configured to indicate a mapping requirement for the multiplexed data flow.

In a sixth aspect, the embodiments of the present disclosure provide a first core network device. The first core network device includes: a transceiver module configured to determine first information, in which the first information is configured to request to determine a first rule, and the first rule is configured for traffic mapping of a multiplexed data flow of a first service.

In combination with some embodiments of the sixth aspect, in some embodiments, the first information may be obtained by at least one of: receiving the first information sent by a second core network device; receiving the first information sent by a seventh core network device; determining the first information based on an operation and maintenance and management configuration of an operator; or determining the first information according to a local configuration.

In combination with some embodiments of the sixth aspect, in some embodiments, the first information may include at least one of: indication information, configured to indicate whether to use the multiplexed data flow; or requirement information, configured to indicate a mapping requirement for the multiplexed data flow.

In combination with some embodiments of the sixth aspect, in some embodiments, the requirement information may include at least one of: a mapping type; a mapping descriptor; or a mapping precedence.

In combination with some embodiments of the sixth aspect, in some embodiments, the mapping type may include at least one of: one-to-one mapping; one-to-many mapping; many-to-one mapping; or many-to-many mapping.

In combination with some embodiments of the sixth aspect, in some embodiments, the mapping descriptor may include at least one of: a media type; a stream dependency; a channel dependency; a layer dependency; or a synchronization dependency.

In combination with some embodiments of the sixth aspect, in some embodiments, the mapping precedence may include at least one of: a mapping requirement precedence; a mapping type precedence; or a mapping descriptor precedence.

In combination with some embodiments of the sixth aspect, in some embodiments, the transceiver module may further be configured to: send second information to a third core network device, in which the second information includes one of: the first rule; indication information, configured to indicate whether to use the multiplexed data flow; or requirement information, configured to indicate a mapping requirement for the multiplexed data flow.

In combination with some embodiments of the sixth aspect, in some embodiments, the first core network device may further include: a processing module configured to determine the first rule according to the indication information and/or the requirement information.

In combination with some embodiments of the sixth aspect, in some embodiments, the transceiver module may further be configured to: send the first information to a seventh core network device.

In a seventh aspect, the embodiments of the present disclosure provide a second core network device. The second core network device includes: a transceiver module, configured to send first information to a first core network device, in which the first information is configured to request to determine a first rule, and the first rule is configured for traffic mapping of a multiplexed data flow of a first service.

In combination with some embodiments of the seventh aspect, in some embodiments, the first information may include at least one of: indication information, configured to indicate whether to use the multiplexed data flow; or requirement information, configured to indicate a mapping requirement for the multiplexed data flow.

In combination with some embodiments of the seventh aspect, in some embodiments, the requirement information may include at least one of: a mapping type; a mapping descriptor; or a mapping precedence.

In combination with some embodiments of the seventh aspect, in some embodiments, the mapping type may include at least one of: one-to-one mapping; one-to-many mapping; many-to-one mapping; or many-to-many mapping.

In combination with some embodiments of the seventh aspect, in some embodiments, the mapping descriptor may include at least one of: a media type; a stream dependency; a channel dependency; a layer dependency; or a synchronization dependency.

In combination with some embodiments of the seventh aspect, in some embodiments, the mapping precedence may include at least one of: a mapping requirement precedence; a mapping type precedence; or a mapping descriptor precedence.

In an eighth aspect, the embodiments of the present disclosure provide a third core network device. The third core network device includes: a transceiver module, configured to receive second information sent by a first core network device, in which the second information includes one of: a first rule, configured for traffic mapping of a multiplexed data flow of a first service; indication information, configured to indicate whether to use the multiplexed data flow; or requirement information, configured to indicate a mapping requirement for the multiplexed data flow.

In combination with some embodiments of the eighth aspect, in some embodiments, the requirement information may include at least one of: a mapping type; a mapping descriptor; or a mapping precedence.

In combination with some embodiments of the eighth aspect, in some embodiments, the mapping type may include at least one of: one-to-one mapping; one-to-many mapping; many-to-one mapping; or many-to-many mapping.

In combination with some embodiments of the eighth aspect, in some embodiments, the mapping descriptor may include at least one of: a media type; a stream dependency; a channel dependency; a layer dependency; or a synchronization dependency.

In combination with some embodiments of the eighth aspect, in some embodiments, the mapping precedence may include at least one of: a mapping requirement precedence; a mapping type precedence; or a mapping descriptor precedence.

In combination with some embodiments of the eighth aspect, in some embodiments, the first rule may be determined according to the indication information and/or the requirement information.

In combination with some embodiments of the eighth aspect, in some embodiments, the transceiver module may further be configured to: send third information to a fourth core network device, in which the third information includes a second rule, and the second rule is configured for traffic mapping of the multiplexed data flow of the first service.

In combination with some embodiments of the eighth aspect, in some embodiments, the second rule may be determined according to one of: the first rule; or at least one of the indication information or the requirement information.

In a ninth aspect, the embodiments of the present disclosure provide a fourth core network device. The fourth core network device includes: a processing module, configured to determine, according to a second rule, a mapping of a multiplexed data flow of a first service to a QoS flow, in which the second rule is configured for traffic mapping of the multiplexed data flow.

In combination with some embodiments of the ninth aspect, in some embodiments, the fourth core network device may further include: a transceiver module, configured to receive third information sent by a third core network device, in which the third information includes a second rule, and the second rule is configured for traffic mapping of the multiplexed data flow of the first service.

In combination with some embodiments of the ninth aspect, in some embodiments, the second rule may be locally configured.

In a tenth aspect, the embodiments of the present disclosure provide a communication apparatus. The communication apparatus includes: one or more processors and a memory storing instructions. When executed by the communication apparatus, the instructions cause the communication apparatus to implement the communication method according to any one of the first aspect and its possible implementations.

In an eleventh aspect, the embodiments of the present disclosure provide a communication apparatus. The communication apparatus includes: one or more processors and a memory storing instructions. When executed by the communication apparatus, the instructions cause the communication apparatus to implement the communication method according to any one of the second aspect and its possible implementations.

In a twelfth aspect, the embodiments of the present disclosure provide a communication apparatus. The communication apparatus includes: one or more processors and a memory storing instructions. When executed by the communication apparatus, the instructions cause the communication apparatus to implement the communication method according to any one of the third aspect and its possible implementations.

In a thirteenth aspect, the embodiments of the present disclosure provide a communication apparatus. The communication apparatus includes: one or more processors and a memory storing instructions. When executed by the communication apparatus, the instructions cause the communication apparatus to implement the communication method according to any one of the fourth aspect and its possible implementations.

In a fourteenth aspect, the embodiments of the present disclosure provide a communication apparatus. The communication apparatus includes: one or more processors and a memory storing instructions. When executed by the communication apparatus, the instructions cause the communication apparatus to implement the communication method according to any one of the fifth aspect and its possible implementations.

In a fifteenth aspect, the embodiments of the present disclosure provide a communication system. The communication system includes a first core network device and a second core network device. The first core network device is configured to implement the communication method according to any one of the first aspect and its possible implementations. The second core network device is configured to implement the communication method according to any one of the second aspect and its possible implementations.

In combination with some embodiments of the fifteenth aspect, in some embodiments, the above communication system may further include a third core network device and a fourth core network device. The third core network device is configured to implement the communication method according to any one of the third aspect and its possible implementations. The fourth core network device is configured to implement the communication method according to any one of the fourth aspect and its possible implementations.

In combination with some embodiments of the fifteenth aspect, in some embodiments, the above communication system may further include a fifth core network device, a sixth core network device, and a seventh core network device. The fifth core network device is configured to send fourth information. The fourth information indicates QoS related information. The sixth core network device is configured to send first information from the second core network device to the first core network device. The seventh core network device is configured to send the first information to the first core network device.

In a sixteenth aspect, embodiments of the present disclosure provide a storage medium. The storage medium stores instructions that, when run on a communication device, cause the communication device to perform the communication method according to any one of the first to fifth aspects and their possible implementations.

In a seventeenth aspect, the embodiments of the present disclosure provide a program product that, when executed by a communication device, causes the communication device to perform the communication method according to any one of the first to fifth aspects and their possible implementations.

In an eighteenth aspect, the embodiments of the present disclosure provide a computer program that, when run on a computer, causes the computer to perform the communication method according to any one of the first to fifth aspects and their possible implementations.

In a nineteenth aspect, the embodiments of the present disclosure provide a chip or chip system. The chip or chip system includes a processing circuit. The processing circuit is configured to perform the communication method according to any one of the first to fifth aspects and their possible implementations.

It should be understood that all the core network device (including the first core network device, the second core network device, the third core network device, and the fourth core network device), communication apparatus, communication system, storage medium, program product, computer program, chip, and chip system described above are configured to perform the communication method provided in the embodiments of the present disclosure. Therefore, for beneficial effects they may achieve, reference may be made to the beneficial effects in the corresponding method, which are not repeated here.

The embodiments of the present disclosure provide a communication method and apparatus, a core network device, a communication system, and a storage medium. In some embodiments, the terms such as communication method, information processing method, etc. may be used interchangeably, the terms such as apparatus and information processing apparatus, communication apparatus, etc., may be used interchangeably, and the terms such as information processing system, communication system, etc., may be used interchangeably.

The embodiments of the present disclosure are not exhaustive, but are only illustrative, and are not intended to be a detailed limitation on the protection scope of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and an order of the steps in a certain embodiment may be arbitrarily exchanged. In addition, optional implementations in a certain embodiment may be arbitrarily combined. In addition, the embodiments may be arbitrarily combined. For example, some or all steps of different embodiments may be arbitrarily combined. For another example, a certain embodiment may be arbitrarily combined with optional implementations of other embodiments.

In the embodiments of the present disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the present disclosure, "a plurality of" may mean two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (A is performed independently of B); in some embodiments, B (B is performed independently of A); in some embodiments, one is selected from A and B to be executed (A and B are selectively executed); in some embodiments, A and B (both A and B are performed). When there are more branches such as A, B, C, etc., the above is applicable.

In some embodiments, the descriptions such as "A or B", etc. may include the following technical solutions according to situations: in some embodiments, A (A is performed independently of B); in some embodiments, B (B is performed independently of A); in some embodiments, one is selected from A and B to be performed (A and B are selectively performed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, please refer to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device ( such as, an access network device, a core network device, etc.,) included in a network.

In some embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network device, or the network device may be replaced with the terminal. For example, the structure where communication between access network devices, core network devices, or network devices and terminals is replaced with communication between multiple terminals (e.g., device-to-device (D2D), vehicle-to-everything (V2X), etc.) may also be applied to the embodiments of the present disclosure. In this case, the terminal may also be configured to have all or some of the functions of the access network device. In addition, the terms such as "uplink" and "downlink" may be replaced with the terms (e.g., "sidelink") corresponding to the communication between terminals. For example, uplink channels or downlink channels may be replaced with side channels, and uplink links or downlink links may be replaced with side links.

In some embodiments, the terminal may be replaced with the access network device, the core network device, or the network device. In this case, the access network device, the core network device, or the network device may also be configured with all or some of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

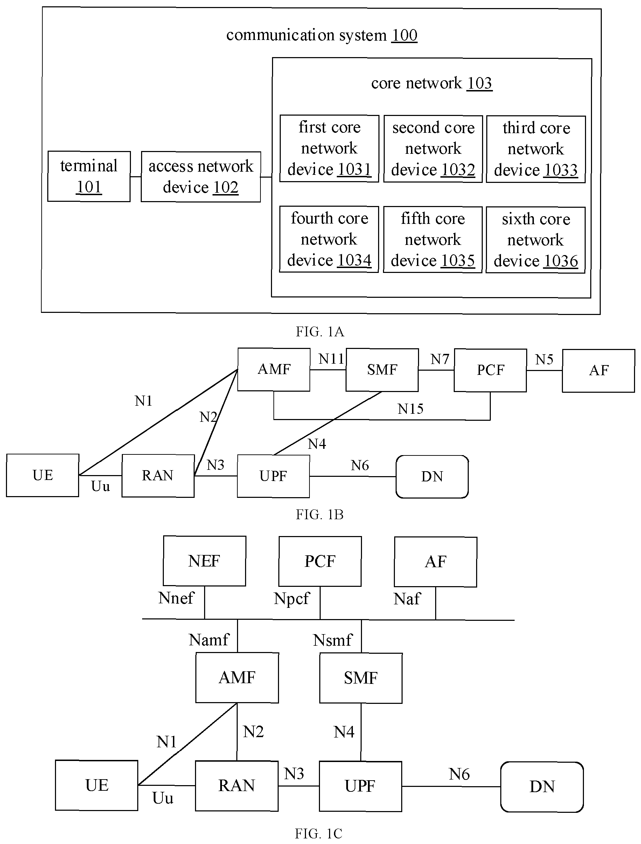

FIG. 1A is a schematic diagram illustrating an architecture of a communication system according to an embodiment of the present disclosure. As illustrated in FIG. 1A, the communication system 100 includes a terminal 101, an access network device 102, and a core network device 103.

In some embodiments, the terminal 101 includes, such as, at least one of a mobile phone, a wearable device, an Internet of Things device, a car with a communication function, a smart car, and a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the access network device 102 is, such as, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the technical solution of the present disclosure may be applied to an Open RAN architecture. In this case, an interface between or within access network devices involved in the embodiments of the present disclosure may be transformed into an internal interface of Open RAN. The processes and information interactions between these internal interfaces may be implemented via software or program.

In some embodiments, the access network device 102 may be combined by a central unit (CU) and a distributed unit (DU). The CU may also be called a control unit. By employing a CU-DU structure, a protocol layer of the access network device may be separated. Some of protocol layer functions are centrally controlled by the CU, and the remaining part or all of protocol layer functions are distributed in the DU, which is centrally controlled by the CU, which is not limited herein.

In some embodiments, the core network 103 may correspond to a single device that integrates a first core network device 1031, a second core network device 1032, a third core network device 1033, a fourth core network device 1034, a fifth core network device 1035, a sixth core network device 1036, etc., or may correspond to multiple devices or device groups, including all or part of the core network devices, such as the first core network device 1031, the second core network device 1032, the third core network device 1033, the fourth core network device 1034, the fifth core network device 1035, the sixth core network device 1036. The core network device may be virtual or physical. The core network includes, such as, at least one of an evolved packet core (EPC), a 5G core network (5GCN), or a next generation core (NGC).

In some embodiments, the first core network device 1031 may be, for example, a policy control function (PCF).

In some embodiments, the first core network device 1031 may be configured to support a unified policy framework and provide a policy rule, and its name is not limited herein.

In some embodiments, the second core network device 1032 may be, for example, an application function (AF).

In some embodiments, the second core network device 1032 may be implemented by an application server and used to provide an application service, and its name is not limited herein.

In some embodiments, the third core network device 1033 may be, for example, a session management function (SMF).

In some embodiments, the third core network device 1033 may be used for functions such as session management, execution of PCF-issued control policies, selection of a user plane function (UPF), and allocation of internet protocol (IP) addresses of UE, and its name is not limited herein.

In some embodiments, the fourth core network device 1034 may be, for example, a UPF.

In some embodiments, the fourth core network device 1034 may be configured to implement functions such as user plane (UP) data forwarding, session/flow-level-based billing statistics, bandwidth limiting, and UP QoS processing, and its name is not limited herein.

In some embodiments, the fifth core network device 1035 may be, for example, an access and mobility management function (AMF).

In some embodiments, the fifth core network device 1035 may be configured to perform mobility management, non-access stratum mobility management (NAS MM) signaling processing, NAS session management (SM) signaling routing, security anchor point and security context management, etc., and its name is not limited herein.

In some embodiments, the sixth core network device 1036 may be, for example, a network exposure function (NEF).

In some embodiments, the sixth core network device 1036 may be configured to ensure the security of an external application to the 3GPP network, and provide an external application with exposure of QoS customization capabilities, mobility state time subscription, AF request distribution, etc., and its name is not limited herein.

In some embodiments, the second core network device 1032 may be located inside the core network 103. Of course, in some scenarios, the second core network device 1032 may be located outside the core network 103, which is not limited in the embodiments of the present disclosure.

In some embodiments, the communication system 100 described above may be a 5G communication system. It should be noted that the communication system 100 may also be other communication systems, such as a 4G communication system or a 6G communication system, which is not limited in the embodiments of the present disclosure.

FIG. 1B and FIG. 1C illustrate an architecture of a communication system using the 5G communication system as an example. Here, the terminal 101 may be a UE, and an access network device 102 may be an RAN.

FIG. 1B is a schematic diagram illustrating an architecture of an implementation of a communication system according to an embodiment of the present disclosure. As illustrated in FIG. 1B, the architecture of the 5G communication system is presented in a manner of reference points.

N1 is a reference point between the UE and an AMF. N2 is a reference point between the RAN and the AMF. N3 is a reference point between the RAN and a UPF. N4 is a reference point between an SMF and the UPF. N5 is a reference point between a PCF and an AF. N6 is a reference point between the UPF and a data network (DN). N7 is a reference point between the SMF and the PCF. N11 is a reference point between the AMF and the SMF. N15 is a reference point between the SMF and the PCF. Uu is an interface between the UE and the RAN.

It should be noted that the NEF is not illustrated in FIG. 1B. However, each core network device in the communication system may interact with the NEF.

FIG. 1C is a schematic diagram illustrating an architecture of another implementation of a communication system according to an embodiment of the present disclosure. As illustrated in FIG. 1C, the architecture of the 5G communication system is presented in a manner of service-based interfaces.

Namf is a service-based interface provided by an AMF. Nsmf is a service-based interface provided by an SMF. Nnef is a service-based interface provided by an NEF. Npcf is a service-based interface provided by a PCF. Naf is a service-based interface provided by an AF.

It may be understood that the communication system in the embodiments of the present disclosure is for more clearly illustrating the technical solutions in the embodiments of the present disclosure and does not constitute a limitation on the technical solutions in the embodiments of the present disclosure. Those skilled in the art may understand that with the evolution of system architectures and the emergence of new service scenarios, the technical solutions in the embodiments of the present disclosure are also applicable to similar technical problems.

The following embodiments of the present disclosure may be applied to the communication system 100 or some of the subjects of the communication system 100 illustrated in FIG. 1A, but are not limited herein. The subjects illustrated in FIG. 1A are examples, and the communication system 100 may include all or some of the subjects in FIG. 1A, or may include other subjects than those illustrated in FIG. 1A. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the present disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (such as, a combination of LTE or LTE-A and 5G, etc.) for application.

In some cases, the services such as mobile media services, online AR/VR and other XR services, online games, and video-based remote control of machines or drones are expected to contribute increasingly higher traffic to a communication network. XR services involve a multi-modal data flow. Multi-modal data are data input from the same device or different devices (including sensors) for the same service/application, which may be output to one or more destination device terminals. Data flows in the multi-modal data each often have a certain or even strong correlation, such as a synchronization of audio and video flows, or a synchronization of tactile and visual senses. There are some common features in data streams of such type of media services, among the data streams, and requirements of these service data streams for a network transmission. Effective identification and utilization of these characteristics may be more helpful for network and service transmission and control, as well as for service assurance and user experience.

In further cases, XRM services and interactive media services require the communication system to comprehensively consider QoS characteristics of service data flows (SDFs). The QoS characteristics include, for example, whether parameters such as delay-sensitive guaranteed bit rate (GBR) data flow, guaranteed flow bit rate (GFBR), packet delay budget (PDB), and default maximum data burst volume (MDBV), etc. may be simultaneously met and coordinated consistently. They involves multiple XRM data flows of one terminal and XRM data flows of multiple terminals, where consistent QoS authorization and execution should be ensured.

In some embodiments, the SDFs of XRM services may support a PDU set-based processing, thereby enhancing QoS sensing and assurance of the SDF and improving quality of experience (QoE) of a user.

In some embodiments, in a system such as 4G, 5G, 6G, V2X or the like, the AF may provide a PDU set QoS parameter and a protocol description. In some embodiments, the PDU set QoS parameter may include at least one of: a PDU set delay budget (PSDB), a PDU set error rate (PSER), or PDU set integrated handling information (PSIHI). Therefore, the SMF and the UPF may combine the protocol description and protocol header extension provided by the AF to extend a packet header of a PDU in a PDU set of the SDF, so as to carry PDU set information. The PDU information carried may be used by the access network for a QoS control based on the PDU set.

In some embodiments, the above PDU information may include at least one of: a PDU set sequence number, a start PDU or an end PDU of the PDU set, a PDU sequence number within the PDU set, a quantity of PDUs within the PDU set, an importance of the PDU set, or a size of the PDU set. Here, the importance of the PDU set is used to identify the importance of one PDU set relative to other PDU sets in the same QoS flow.

Understandably, the UPF performs SDF-to-QoS flow mapping based on a PDU and maps (or encapsulates) interrelated PDUs into the PDU set. Furthermore, the UPF may apply the same QoS policy to all PDU sets within the QoS flow. For example, the UPF may apply the same PDU set QoS parameter to all PDU sets within the QoS flow. In an example, the UPF may map an application flow to the QoS flow based on packet detection information in the PDU. Some PDUs in the QoS flow may be associated with media components (e.g., intra-coded frames and prediction frames), and the UPF classifies these PDUs into the PDU set and performs a corresponding control.

In some cases, the XRM services may be multimedia-type services, which correspond to a plurality of data flows. These data flows may be multiplexed and transmitted within the same quintet (or 5-tuple). The 5-tuple forms an end-to-end transport layer connection. In this case, one or more data flows that are multiplexed in the end-to-end transport layer connection (e.g., the 5-tuple) may be referred to as a multiplexed data flow. In an example, the 5-tuple may be a 5-tuple that conforms to a quick UDP internet connection (QUIC) protocol. In some embodiments, different data flows of the XRM services may have different QoS requirements. Therefore, different data flows may be transmitted using different QUIC connections or different QUIC flows. This requires a QoS architecture of the communication system to provide support for QoS classification in this scenario.

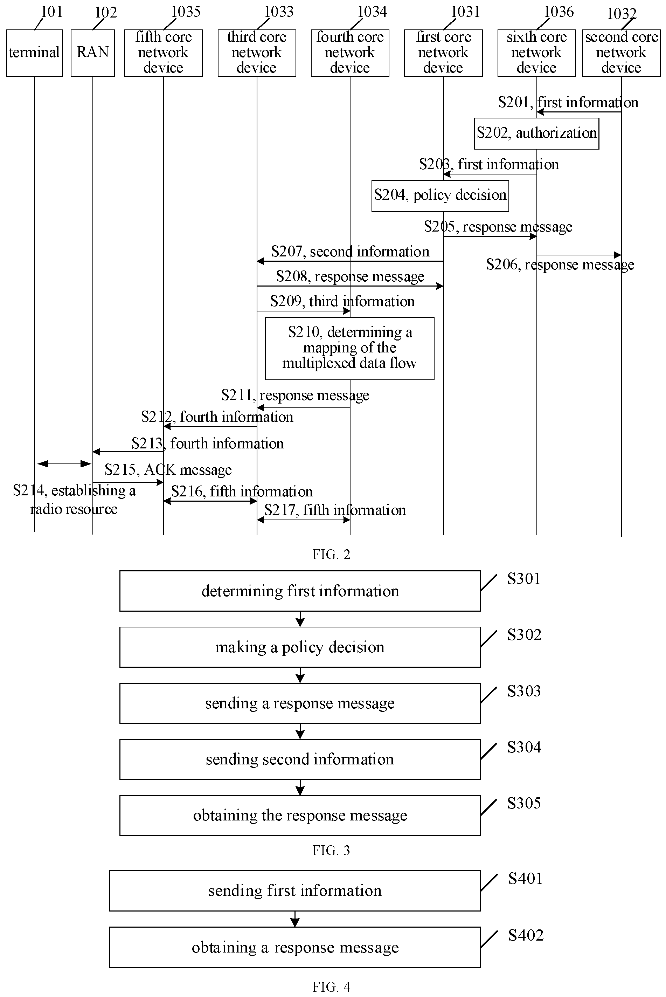

FIG. 2 is a schematic interaction diagram illustrating a communication method according to an embodiment of the present disclosure. The communication method involved in embodiments of the present disclosure may be performed by a communication system 100. As illustrated in FIG. 2, the communication method of the embodiments of the present disclosure includes the following steps S201 to S217.

In step S201, a second core network device 1032 sends first information to a sixth core network device 1036.

In some embodiments, the sixth core network device 1036 may receive the first information.

In some embodiments, the first information may be configured to request to determine a first rule.

In some embodiments, the first information may be configured to request a first core network device 1031 to make a policy decision.

In some embodiments, the name of the first information is not limited, and it may be, for example, session create request information, session QoS request information, etc.

In some embodiments, the first information may include at least one of: indication information, or requirement information.

In some embodiments, the indication information may be configured to indicate whether to use a multiplexed data flow.

In some embodiments, the indication information may be configured to indicate whether a data flow of a first service is the multiplexed data flow.

In some embodiments, the name of the indication information is not limited, and it may be, for example, a multiplexed data flow indication, indication of multiplexed data flows, etc.

In some embodiments, the requirement information may be configured to indicate a mapping requirement for the multiplexed data flow. This mapping requirement may be used by the first core network device 1031 to determine the first rule.

In some embodiments, the name of the requirement information is not limited, and it may be, for example, a traffic mapping requirement, mapping parameter information, mapping requirement indication information, etc.

In some embodiments, the requirement information may include at least one of: a mapping type, a mapping descriptor, or a mapping precedence.

In some embodiments, the mapping type may be configured to indicate a mapping relationship between the data flow of the first service and a QoS flow.

In some embodiments, the mapping type may include one of: one-to-one mapping, one-to-many mapping, many-to-one mapping, or many-to-many mapping. In an example, for the one-to-one mapping type, one data flow of the first service may be mapped to one QoS flow. In an example, for the one-to-many mapping type, one data flow of the first service may be mapped to a plurality of QoS flows. In an example, for the many-to-one mapping type, a plurality of data flows of the first service may be mapped to one QoS flow. In an example, for the many-to-many mapping type, a plurality of data flows of the first service may be mapped to a plurality of QoS flows.

In some embodiments, the mapping descriptor may be configured to describe a requirement related to the mapping.

In some embodiments, the mapping descriptor may be configured to describe each data flow of the first service.

In some embodiments, the mapping descriptor may include at least one of: a media type, a stream dependency, a channel dependency, a layer dependency, or a synchronization dependency. It is understood that the mapping descriptor may also include other information, which is not limited in the embodiments of the present disclosure.

In some embodiments, the media type may be a media type of the data flow of the first service. In some embodiments, the media type may include at least one of: a video, or an audio. In an example, the media type of one or more data flows of the first service may be the video. In an example, the media type of one or more data flows of the first service may be the audio. In an example, the media type of one or more data flows of the first service may be the video, and the media type of one or more another data flows may be the audio. It may be understood that the media type may also include other types (e.g., a haptic feedback), which is not limited in embodiments of the present disclosure.

In some embodiments, the stream dependency may be a dependency relationship between data flows in the multiplexed data flow of the first service. In some implementations, the stream dependency may be configured to indicate a dependency of one data flow on the multiplexed data flow of the first service.

In some embodiments, the channel dependency may be a dependency relationship between different channels of the first service. In some embodiments, audio data may include data from one or more audio channels, and the channel dependency may be a dependency relationship between the audio channels. In an example, the channel dependency may be configured to indicate a dependency of one audio channel on each audio channel of an audio of the first service.

In some embodiments, the layer dependency may be a dependency relationship between different layers of the first service. In some embodiments, a video consists of a series of consecutive images. Image data may include data of one or more layers. The layer dependency may be a dependency relationship between the layers. In an example, the layer dependency may be configured to indicate a dependency of one layer on each layer of a video image of the first service.

In some embodiments, the synchronization dependency may be a synchronization requirement and/or delay requirement between data flows in the multiplexed data flow of the first service. In some embodiments, the synchronization dependency may be configured to indicate a synchronization rate and/or a delay size between some or all data flows in the multiplexed data flow of the first service.

In some embodiments, the mapping precedence may be configured to indicate a precedence order among different mapping requirements.

In some embodiments, the mapping precedence may include at least one of: a mapping requirement precedence, a mapping type precedence, or a mapping descriptor precedence.

In some embodiments, the mapping requirement precedence may be configured to indicate a precedence of one or more traffic mapping requirements.

In some embodiments, the mapping type precedence may be configured to indicate a precedence order among one or more mapping types. In an example, any two of the following mappings may have the same or different priorities: one-to-one mapping, one-to-many mapping, many-to-one mapping, or many-to-many mapping.

In some embodiments, the mapping descriptor precedence may be configured to indicate priorities of a plurality of mapping descriptors. In an example, a mapping description may be the mapping descriptor. At this point, different mapping descriptors may correspond to the same or different priorities.

In some embodiments, the first information may be sent by the second core network device 1032 to the sixth core network device 1036 via the service-based interface Nnef.

In some embodiments, the first information may be carried in a request message. In an example, the request message may be an AF session resource request message. In an example, the AF session resource request message may be an Nnef_AFSessionWithQoS_Create request message.

In some embodiments, the request message may be a message in an AF QoS request procedure.

In some embodiments, the request message may be a message in an AF QoS update procedure.

In some embodiments, the first information may be included in a QoS requirement for the first service carried in the AF session resource request message.

In some embodiments, the AF session resource request message may also include at least one of: a protocol description, or a traffic detection information.

In some embodiments, the protocol description may include at least one of: a protocol type, a codec type, or a media type. In some embodiments, at least one of the protocol type, the codec type, or the media type may be carried in traffic detection information.

In some embodiments, the request message may also include service information of the first service.

In some embodiments, the first service may be an XRM service, an interactive media service, etc. It may be understood that the first service may be other services, which is not limited in the embodiments of the present disclosure.

In some embodiments, the service information of the first service may include at least one of: a data flow identifier (ID) of the first service, an address of the terminal 101, an ID of the terminal 101, an AF service ID, an external application ID, a flow description, a single-network slice selection assistance information (S-NSSAI), or a data network name (DNN). It may be understood that the service information of the first service may include other information, which is not limited in the embodiments of the present disclosure.

In some embodiments, the data flow ID of the first service may be configured to identify data flows and/or data flow groups associated with the first service. In an example, the data flow ID may be a multi-modal service ID. The multi-modal service IDs may be configured to identify all flows in a group of the first services.

In step S202, the sixth core network device 1036 performs authorization.

In some embodiments, the sixth core network device 1036 may authorize the request message from the second core network device 1032.

In some embodiments, the second core network device 1032 may be untrusted. In this case, the request message may be sent from the sixth core network device 1036 to the first core network device 1031.

In some embodiments, the sixth core network device 1036 may perform mapping.

In some embodiments, the sixth core network device 1036 may implement the mapping between the first service and the DNN and/or S-NSSAI. In an example, the sixth core network device 1036 may map the AF service ID of the first service to the DNN and/or S-NSSAI. In an example, the sixth core network device 1036 may map the external application ID to a known application ID in the core network.

In some embodiments, the sixth core network device 1036 may implement the mapping between an external ID and an internal ID of the terminal 101. In an example, the sixth core network device 1036 may map an ID outside the core network to an ID inside the core network of the terminal 101 based on subscription information. In an example, the subscription information may be obtained from a unified data management (UDM).

In some embodiments, the sixth core network device 1036 may implement the mapping between an external group ID and an internal group ID of the first service. In an example, the sixth core network device 1036 may map a group ID outside the core network to a group ID inside the core network of the first service based on the subscription information. In an example, the subscription information may be obtained from the UDM.

In step S203, the sixth core network device 1036 sends the first information to the first core network device 1031.

In some embodiments, the sixth core network device 1036 may send the first information received from the second core network device 1032 to the first core network device 1031.

In some embodiments, the first core network device 1031 may receive the first information.

In some embodiments, the sixth core network device 1036 may also send to the first core network device 1031 at least one of: the protocol description, the traffic detection information, or the service information of the first service.

In some embodiments, the sixth core network device 1036 may send the first information in different manners. In some embodiments, the sixth core network device 1036 may determine a manner of sending the first information according to information and/or parameter received from the second core network device 1032.

In some embodiments, the manner of sending the first information by the sixth core network device 1036 may include: sending the first information via a time sensitive communication and time synchronization function (TSCTSF) or sending the first information directly.

In some embodiments, the sixth core network device 1036 may determine to send the first information to the first core network device 1031 via the TSCTSF. In some embodiments, the sixth core network device 1036 may send the first information to the TSCTSF via a service-based interface Ntsftsf, and the TSCTSF may send the first information to the first core network device 1031 via the service-based interface Npcf. In an example, the sixth core network device 1036 may send the first information to the TSCTSF via an Ntsctsf_QoSandTSCAssistance_Create request message, and the TSCTSF may send the first information to the first core network device 1031 via an Npcf_PolicyAuthorization_Create request message or an Npcf_PolicyAuthorization_Update request message.

In some embodiments, the sixth core network device 1036 may determine to send the first information directly to the first core network device 1031. In some embodiments, the sixth core network device 1036 may send the first information to the first core network device 1031 via the service-based interface Npcf. In an example, the sixth core network device 1036 may send the first information to the first core network device 1031 via the Npcf_PolicyAuthorization_Create request message.

In some embodiments, steps S201 to S203 may be omitted (i.e. not executed). In this case, the first core network device 1031 may not obtain the first information from the second core network device 1032. Therefore, the first core network device 1031 may obtain the first information via other manners.

In some embodiments, the first core network device 1031 may receive the first information from a seventh core network device (not illustrated). In an example, the seventh core network device may send the first information to the first core network device 1031 after obtaining the first information.

In some embodiments, the seventh core network device may be a core network device with the same function as the first core network device 1031. In other words, the seventh core network device may be another first core network device.

In some embodiments, the first core network device 1031 may determine the first information based on an operation and maintenance and management configuration of an operator.

In some embodiments, the first core network device 1031 may determine the first information according to a local configuration.

In step S204, the first core network device 1031 makes the policy decision.

In some embodiments, the first core network device 1031 may make the policy decision to determine the first rule.

In some embodiments, the first rule may be configured for traffic mapping of the multiplexed data flow of the first service.

In some embodiments, the first rule may be a QoS rule. In some embodiments, the first rule may belong to the QoS rule.

In some embodiments, the first rule may be new. In some embodiments, the first core network device 1031 may determine a new first rule according to the first information.

In some embodiments, the first rule may be updated. The first core network device 1031 may determine to update the existing first rule according to the first information.

In some embodiments, the first core network device 1031 may consider the first information during a process of determining the first rule.

In some embodiments, the first rule may be determined based on the consideration of the first information.

In some embodiments, the first rule may be determined by considering at least one of the indication information or the requirement information.

In some embodiments, the name of the first rule is not limited, and it may be, for example, a traffic mapping policy, a traffic mapping rule, and a traffic mapping relationship.

In some embodiments, the first rule may be included in a policy and charging control (PCC) rule. In an example, the first rule may be part of the PCC rule.

In some embodiments, the first rule may include at least one of: the mapping precedence, the mapping type, the mapping descriptor, the media type, the media format, the stream dependency, the channel dependency, the layer dependency, the synchronization dependency, the stream importance, the channel importance, or the layer importance. Of course, the first rule may also include other information, which is not limited in the embodiments of the present disclosure.

In some embodiments, the mapping precedence may be configured to determine an application order of the mapping requirement and/or the mapping type and/or the mapping descriptor. In an example, a corresponding mapping precedence may be used for each first rule. In an example, a corresponding mapping precedence may be used for each mapping type. In an example, a corresponding mapping precedence may be used for each mapping descriptor.

In some embodiments, the mapping type may be configured to indicate a mapping mode. In an example, the mapping mode indicated by the mapping type may be at least one of: one-to-one mapping, one-to-many mapping, many-to-one mapping, or many-to-many mapping. In an example, the mapping mode may be represented as an m-to-n mapping, where m and n are positive integers. In an example, m may be equal to or not equal to n.

In some embodiments, the mapping descriptor may include mapping descriptor components required for the first rule.

In some embodiments, the media type may be configured to indicate mapping considering the media type. In an example, the media type may include the audio and/or the video. In this case, the first rule may be used for all the audio and/or video type streams.

In some embodiments, the media format may be configured to indicate mapping considering the media format. In an example, the media format may include at least one of: media format information, or a parameter and/or information related to the media format.

In some embodiments, the stream dependency may be configured to indicate mapping considering the stream dependency. In an example, the stream dependency may be configured to indicate the sub-stream(s) that depends on the multiplexed data flow. At this point, the first rule may be used for the sub-stream(s) of the multiplexed data flow.

In some embodiments, the channel dependency may be configured to indicate mapping considering the channel dependency. In an example, the channel dependency may be configured to indicate streams of one or more channels of the audio. At this point, the first rule may be used for the streams of one or more channels of the audio.

In some embodiments, the layer dependency may be configured to indicate mapping considering the layer dependency. In an example, the layer dependency may be configured to indicate streams of one or more layers of the video. At this point, the first rule may be used for the streams of one or more layers of the video.

In some embodiments, the synchronization dependency may be configured to indicate mapping considering the synchronization dependency. In an example, the synchronization dependency may be configured to indicate one or more streams with synchronization requirements and/or delay requirements. At this point, the first rule may be used for the one or more streams with the synchronization requirements and/or delay requirements.

In some embodiments, the stream importance may be configured to indicate mapping considering the stream importance. In an example, the stream importance may be configured to indicate the sub-stream(s) and the multiplexed stream(s) which has the relative importance (i.e., a more important). At this point, the first rule may be used for the sub-stream(s) and the multiplexed stream(s) which has the relative importance (i.e., more important).

In some embodiments, the channel importance may be configured to indicate mapping considering the channel importance. In an example, the channel importance may be configured to indicate the streams of one or more channels of the audio which has the relative importance (i.e. more important). At this point, the first rule may be used for the streams of one or more channels of the audio which has the relative importance (i.e. more important).

In some embodiments, the layer importance may be configured to indicate mapping considering the layer importance. In an example, the layer importance may be configured to indicate the streams of one or more layers of the video which has the relative importance (i.e., more important). At this point, the rule may be used for the streams of one or more layers of the video which has the relatively importance (i.e., more important) stream.

In step S205, the first core network device 1031 sends a response message to the sixth core network device 1036.

In some embodiments, the sixth core network device 1036 may receive the response message.

In some embodiments, the first core network device 1031 may send the response message after receiving the first information.

In some embodiments, the response message may be an Npcf_PolicyAuthorization_Create response message. At this time, the Npcf_PolicyAuthorization_Create response message may be sent by the first core network device 1031 for the Npcf_PolicyAuthorization_Create request message.

In step S206, the sixth core network device 1036 sends the response message to the second core network device 1032.

In some embodiments, the second core network device 1032 may receive the response message.

In some embodiments, the response message may carry an authorization result of the request message from the first core network device 1031 to the second core network device 1032. Thus, the response message may be configured to indicate to the second core network device 1032 whether the request message is authorized.

In some embodiments, the sixth core network device 1036 may send the response message to the second core network device 1032 after receiving the response message from the first core network device 1031.

In some embodiments, the response message may be an Nnef_AFSessionWithQoS_Create response message.

In step S207, the first core network device 1031 sends second information to a third core network device 1033.

In some embodiments, the third core network device 1033 may receive the second information.

In some embodiments, the second information may be used by the third core network device 1033 to determine a second rule.

In some embodiments, the second information may include at least one of: a first rule, indication information, or requirement information. In an example, the second information may include the first rule. In an example, the second information may include the indication information and/or the requirement information. In an example, the second information may include the first rule, and the indication information and/or the requirement information.

In some embodiments, the second information may be sent to the third core network device 1033 via the service-based interface Npcf.

In some embodiments, the first core network device 1031 may initiate an SM Policy Association Modification procedure to send the second information.

In some embodiments, the second information may be carried in an Npcf_SMPolicyControl_UpdateNotify request message.

In step S208, the third core network device 1033 sends the response message to the first core network device 1031.

In some embodiments, the first core network device 1031 may receive the response message.

In some embodiments, the third core network device 1033 may send the response message after receiving the second information.

In some embodiments, the response message may be the Npcf_SMPolicyControl_UpdateNotify response message.

In step S209, the third core network device 1033 sends third information to a fourth core network device 1034.

In some embodiments, the fourth core network device 1034 may receive the third information.

In some embodiments, third information may be configured to indicate a mapping rule.

In some embodiments, the third information may include the second rule.

In some embodiments, the second rule may be configured for the traffic mapping of the multiplexed data flow of the first service.

In some embodiments, the name of the second rule is not limited, and it may be, for example, the traffic mapping policy, the traffic mapping rule, and the traffic mapping relationship.

In some embodiments, the second rule may be determined by the third core network device 1033 according to the second information after receiving the second information.

In some embodiments, the second rule may be determined according to the first rule.

In some embodiments, the second rule may be determined according to the indication information and/or the requirement information.

In some embodiments, the second rule may be determined according to the first rule, and the indication information and/or the requirement information.

In some embodiments, the second rule may be the QoS rule. In some embodiments, the second rule may belong to the QoS rule.

In some embodiments, the third information may also include a QoS parameter.

In some embodiments, the third core network device 1033 may send the third information via an N4 session.

In some embodiments, the third information may be carried in an N4 Session Modification request message.

In some embodiments, step S209 may be omitted (i.e. not executed). In this case, the fourth core network device 1034 may not obtain the third information from the third core network device 1033. Therefore, the fourth core network device 1034 may obtain the second rule via other manners.

In some embodiments, the second rule may be locally configured. In other words, the second rule may be pre-configured on the third core network device 1033.

In step S210, the fourth core network device 1034 determines a mapping of the multiplexed data flow.

In some embodiments, the fourth core network device 1034 may determine the mapping of the multiplexed data flow of the first service to the QoS flow according to the second rule.

In some embodiments, the second rule and/or QoS parameter in the third information may be configured to the fourth core network device 1034. Thus, the fourth core network device 1034 may implement the mapping of the multiplexed data flow of the first service to the QoS flow according to the second rule.

In some embodiments, in a case that a traffic of the multiplexed data flow of the first service is detected, the fourth core network device 1034 may implement the mapping of the multiplexed data flow of the first service according to the second rule. In an example, the fourth core network device 1034 may implement a mapping of the multiplexed data flow of the first service to one or more corresponding QoS flows according to the second rule.

In step S211, the fourth core network device 1034 sends the response message to the third core network device 1033.

In some embodiments, the third core network device 1033 may receive the response message.

In some embodiments, the fourth core network device 1034 may send the response message via the N4 session.

In some embodiments, the response message may be an N4 Session Modification response message.

In step S212, the third core network device 1033 sends fourth information to a fifth core network device 1035.

In some embodiments, the fifth core network device 1035 may receive the fourth information.

In some embodiments, the fourth information may be configured to indicate QoS related information.

In some embodiments, the fourth information may include at least one of: a QoS rule or a QoS parameter.

In some embodiments, the QoS rule in the fourth information may be the first rule, or determined based on the first rule.

In some embodiments, the QoS rule in the fourth information may be the second rule, or determined based on the second rule.

In some embodiments, the QoS rule in the fourth information may be determined based on the indication information and/or the requirement information.

In some embodiments, the fourth information may be sent to the fifth core network device 1035 via the service-based interface Namf.

In some embodiments, the third core network device 1033 may send the fourth information to the fifth core network device 1035 via an Namf_Communication_N1N2MessageTransfer service operation.

In some embodiments, during the Namf_Communication_N1N2MessageTransfer service operation, the third core network device 1033 may send an Namf_Communication_N1N2MessageTransfer request message to the fifth core network device 1035, and the fifth core network device 1035 may send an Namf_Communication_N1N2MessageTransfer response message to the third core network device 1033. The fourth information may be carried in the Namf_Communication _N1N2MessageTransfer request message.

In some embodiments, at least one of the following may also be sent via the Namf_Communication_N1N2MessageTransfer service operation: N2 SM information, a PDU session ID, a QoS flow identifier (QFI), a QoS configuration (profile), or an N1 SM container.

In step S213, the fifth core network device 1035 sends the fourth information to an access network (AN) device 102.

In some embodiments, the access network device 102 may receive the fourth information.

In some embodiments, the fifth core network device 1035 may send the fourth information to the access network device 102 via an N2 message.

In some embodiments, the N2 message may be an N2 PDU session request message.

In some embodiments, the N2 message may also include at least one of: the N2 SM information, or an NAS message.

In some embodiments, the NAS message may include at least one of: the PDU session ID, or the N1 SM container.

In some embodiments, the N1 SM container may include a PDU session modification command.

In step S214, the access network device 102 establishes a radio resource with the terminal 101.

In some embodiments, the access network device 102 may send an AN dedicated signaling to exchange information with the terminal 101.

In some embodiments, the access network device 102 may send the received fourth information to the terminal 101.

In some embodiments, the access network device 102 may also send the received N2 SM information and/or NAS message to the terminal 101.

In some embodiments, the fourth information enables the terminal 101 and the access network device 102 to establish the radio resource associated with the QoS rule.

In step S215, the access network device 102 sends an acknowledgment message to the fifth core network device 1035.

In some embodiments, the fifth core network device 1035 may receive the acknowledgment (ACK) message.

In some embodiments, the access network device may send the ACK message to the fifth core network device 1035 via the N2 message.

In some embodiments, the ACK message may be configured to indicate receipt of the N2 PDU session request message.

In some embodiments, the ACK message may be an N2 PDU session ACK message.

In some embodiments, the ACK message may carry the N2 SM information.

In step S216, the fifth core network device 1035 sends fifth information to the third core network device 1033.

In some embodiments, the third core network device 1033 may receive the fifth information.

In some embodiments, the fifth information may include the N2 SM information.

In some embodiments, the fifth core network device 1035 may send the fifth information to the third core network device 1033 via an Nsmf_PDUSession_UpdateSMContext service operation.

In some embodiments, during the Nsmf_PDUSession_UpdateSMContext service operation, the fifth core network device 1035 may send an Nsmf_PDUSession_UpdateSMContext request message to the third core network device 1033, and the third core network device 1033 may send an Nsmf_PDUSession_UpdateSMContext response message to the fifth core network device 1035. The fifth information may be carried in the Nsmf_PDUSession_UpdateSMContext request message.

In step S217, the third core network device 1033 sends the fifth information to the fourth core network device 1034.

In some embodiments, the third core network device 1033 may send the received fifth information to the fourth core network device 1034.

In some embodiments, the fourth core network device 1034 may receive the fifth information.

In some embodiments, the fourth core network device 1034 may send the fifth information to the fourth core network device 1034 via an N4 Session Modification service operation.

In some embodiments, during the N4 Session Modification service operation, the third core network device 1033 may send the N4 Session Modification request message to the fourth core network device 1034, and the fourth core network device 1034 may send the N4 Session Modification response message to the third core network device 1033. The fifth information may be carried in the N4 Session Modification request message.

In some embodiments, the fifth information may be configured to update the N4 session of the fourth core network device 1034.

It should be noted that the communication system 100 may include part of the first core network device 1031, the second core network device 1032, the third core network device 1033, the fourth core network device 1034, the fifth core network device 1035, the sixth core network device 1036, and the seventh core network device (not illustrated) described above.

In some embodiments, the communication system 100 may include the first core network device 1031 and the second core network device 1032.

In some embodiments, the communication system 100 may further include the third core network device 1033 and/or the fourth core network device 1034. In an example, the communication system 100 may include the first core network device 1031, the second core network device 1032, and the third core network device 1033. In an example, the communication system 100 may include the first core network device 1031, the second core network device 1032, and the fourth core network device 1034. In an example, the communication system 100 may include the first core network device 1031, the second core network device 1032, the third core network device 1033, and the fourth core network device 1034.

In some embodiments, the communication system 100 may further include one or more of the fifth core network device 1035, the sixth core network device 1036, and the seventh core network device. In an example, the communication system 100 may include the first core network device 1031, the second core network device 1032, and the sixth core network device 1036. In an example, the communication system 100 may include the first core network device 1031, the second core network device 1032, and the seventh core network device. In an example, the communication system 100 may include the first core network device 1031, the second core network device 1032, the third core network device 1033, and the fifth core network device 1035. In an example, the communication system 100 may include the first core network device 1031, the second core network device 1032, the third core network device 1033, the fourth core network device 1034, and the fifth core network device 1035. In an example, the communication system 100 may include the first core network device 1031, the second core network device 1032, the third core network device 1033, the fourth core network device 1034, the fifth core network device 1035, and the sixth core network device 1036.

In some embodiments, names are not limited to those recorded in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "uplink", "physical uplink", etc. may be used interchangeably; terms such as "downlink", "physical downlink", etc. may be used interchangeably; and terms such as "side", "sidelink", "sidelink communication", "direct link", "direct communication", "direct link communication" etc. may be used interchangeably.

In some embodiments, the terms such as "radio", "wireless", "radio access network (RAN)", "access network (AN)", and "RAN-based" may be used interchangeably.

In some embodiments, the terms such as "moment", "time point", "time", and "time location", etc. may be used interchangeably, and the terms such as "duration," "time period", "time window", "window", and "time", etc. may be used interchangeably.

In some embodiments, the terms such as "acquiring", "obtaining", "getting", "receiving", "transmitting", "bidirectional transmission", "sending and/or receiving" may be used interchangeably, which may be interpreted as receiving from another entity, obtaining from a protocol, obtaining from a high layer, obtaining via processing by itself, autonomously implementing, and other meanings.

In some embodiments, the terms such as "sending", "emitting", "reporting", "issuing", "transmitting", "bidirectional transmission", "sending and/or receiving" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be made by a value (0 or 1) represented by 1 bit, or by a true-false value (boolean) represented by true or false, or by a comparison of numerical values (e.g., a comparison with a predetermined value), which is not limited herein.

In some embodiments, the terms such as "traffic", "flow", "stream", and "data flow", etc. may be used interchangeably.

The communication methods involved in the embodiments of the present disclosure may include at least one of steps S201 to S217. For example, step S201 may be implemented as an independent embodiment. For example, step S203 may be implemented as an independent embodiment. For example, step S207 may be implemented as an independent embodiment. For example, step S209 may be implemented as an independent embodiment. For example, step S210 may be implemented as an independent embodiment. For example, a combination of steps S201 and S203 may be implemented as an independent embodiment. For example, a combination of steps S209 and S210 may be implemented as an independent embodiment. It should be noted that possible independent embodiments consisting of one or more of steps S201 to S217 are not limited herein.

In some embodiments, at least two of steps S201 to S217 may be executed in an exchanged order or simultaneously. For example, steps S205 and S206 may be executed in an exchanged order or simultaneously. For example, steps S208 and S209 may be executed in an exchanged order or simultaneously.

In some embodiments, steps S202 to S217 are optional, and one or more of these steps may be omitted or substituted in different embodiments.

In some embodiments, steps S201, S202, and S204 to S217 are optional, and one or more of these steps may be omitted or substituted in different embodiments.

In some embodiments, steps S201 to S206 and S208 to S217 are optional, and one or more of these steps may be omitted or substituted in different embodiments.

In some embodiments, steps S201 to S209 and S211 to S217 are optional, and one or more of these steps may be omitted or substituted in different embodiments.

FIG. 3 is a flowchart illustrating a communication method according to an embodiment of the present disclosure. Embodiments of the present disclosure relate to the communication method. The communication method is performed by a first core network device 1031. As illustrated in FIG. 3, the above method includes the following steps S301 to S305.

In step S301, first information is determined.

For an optional implementation of step S301, reference may be made to the optional implementation of step S203 in FIG. 2, and other related parts in the embodiments involved in FIG. 2, which will not be repeated here.

In some embodiments, the first core network device 1031 may receive the first information sent by a second core network device 1032 (via a sixth core network device 1036) or other entities/devices, which is not limited herein.

In some embodiments, the first core network device 1031 may receive the first information sent by a seventh core network device.

In some embodiments, the first core network device 1031 may obtain the first information specified by a protocol.

In some embodiments, the first core network device 1031 may obtain the first information from an upper layer.

In some embodiments, the first core network device 1031 may obtain the first information by processing information.

In some embodiments, the first core network device 1031 may determine the first information based on an operation and maintenance and management configuration of an operator.

In some embodiments, the first core network device 1031 may determine the first information according to a local configuration.

In step S302, a policy decision is made.

For an optional implementation of step S302, reference may be made to the optional implementation of step S204 in FIG. 2, and other related parts in the embodiments involved in FIG. 2, which will not be repeated here.

In some embodiments, the first core network device 1031 may make the policy decision in consideration of the first information.

In some embodiments, a first rule may be determined via the policy decision.

In some embodiments, the first rule may be determined in consideration of the first information.

In step S303, a response message is sent.

For an optional implementation of step S303, reference may be made to the optional implementation of step S205 in FIG. 2, and other related parts in the embodiments involved in FIG. 2, which will not be repeated here.

In some embodiments, the first core network device 1031 may send the response message to the sixth core network device 1036 or other entities/devices, which is not limited herein.

In step S304, second information is sent.

For an optional implementation of step S304, reference may be made to the optional implementation of step S207 in FIG. 2, and other related parts in the embodiments involved in FIG. 2, which will not be repeated here.

In some embodiments, the first core network device 1031 may send the second information to a third core network device 1033 or other entities/devices, which is not limited herein.

In some embodiments, the second information may be used by the third core network device 1033 to determine a second rule.

In step S305, the response message is obtained.

For an optional implementation of step S305, reference may be made to the optional implementation of step S208 in FIG. 2, and other related parts in the embodiments involved in FIG. 2, which will not be repeated here.

In some embodiments, the first core network device 1031 may receive the response message sent by the third core network device 1033 or other entities/devices, which is not limited herein.

The communication methods involved in the embodiments of the present disclosure may include at least one of steps S301 to S305. For example, step S301 may be implemented as an independent embodiment. For example, step S304 may be implemented as an independent embodiment. For example, a combination of steps S301 and S304 may be implemented as an independent embodiment. It should be noted that possible independent embodiments consisting of one or more of steps S301 to S305 are not limited herein.

In some embodiments, at least two of steps S301 to S305 may be executed in an exchanged order or simultaneously. For example, steps S303 and S304 may be executed in an exchanged order or simultaneously.

In some embodiments, steps S302, S303, S304, and S305 are optional, and one or more of these steps may be omitted or substituted in different embodiments.

In some embodiments, steps S301, S302, S303, and S305 are optional, and one or more of these steps may be omitted or substituted in different embodiments.

FIG. 4 is a flowchart illustrating a communication method according to an embodiment of the present disclosure. Embodiments of the present disclosure relate to the communication method. The communication method is performed by a second core network device 1032. As illustrated in FIG. 4, the above method includes the following steps S401 to S402.

In step S401, first information is sent.

For an optional implementation of step S401, reference may be made to the optional implementation of step S201 in FIG. 2, and other related parts in the embodiments involved in FIG. 2, which will not be repeated here.

In some embodiments, the second core network device 1032 may send the first information to a first core network device 1031 (via a sixth core network device 1036) or other entities/devices, which is not limited herein.

In some embodiments, the first information may be used by the first core network device 1031 to determine a first rule.

In step S402, a response message is obtained.

For an optional implementation of step S402, reference may be made to the optional implementation of step S206 in FIG. 2, and other related parts in embodiments involved in FIG. 2, which will not be repeated here.

In some embodiments, the second core network device 1032 may receive the response message sent by the sixth core network device 1036 or other entities/devices, which is not limited herein.

The communication methods involved in the embodiments of the present disclosure may include at least one of steps S401 to S402. For example, step S401 may be implemented as an independent embodiment. It should be noted that possible independent embodiments consisting of one or more of steps S401 to S402 are not limited herein.

In some embodiments, step S402 is optional and may be omitted or replaced in different embodiments.

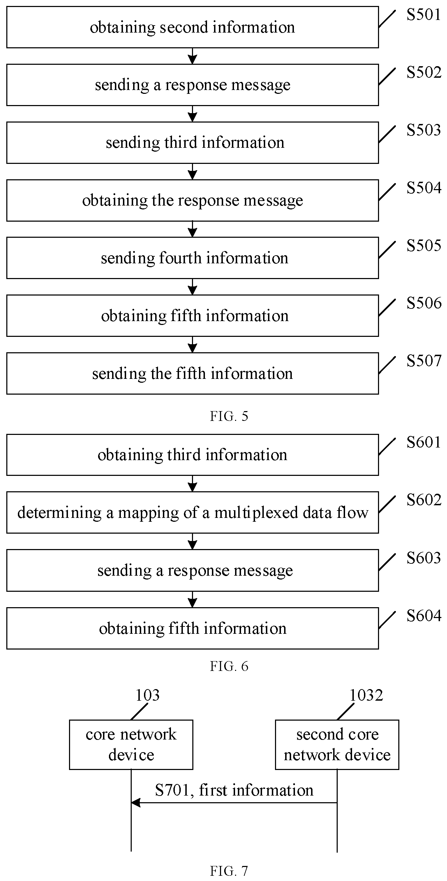

FIG. 5 is a flowchart illustrating a communication method according to an embodiment of the present disclosure. The embodiments of the present disclosure relate to the communication method. The communication method is performed by a third core network device 1033. As illustrated in FIG. 5, the above method includes the following steps S501 to S507.

In step S501, second information is obtained.

For an optional implementation of step S501, reference may be made to the optional implementation of step S207 in FIG. 2, and other related parts in the embodiments involved in FIG. 2, which will not be repeated here.

In some embodiments, the third core network device 1033 may receive the second information sent by a first core network device 1031 or other entities/devices, which is not limited herein.

In step S502, a response message is sent.

For an optional implementation of step S502, reference may be made to the optional implementation of step S208 in FIG. 2, and other related parts in the embodiments involved in FIG. 2, which will not be repeated here.

In some embodiments, the third core network device 1033 may send the response message to the first core network device 1031 or other entities/devices, which is not limited herein.

In step S503, third information is sent.

For an optional implementation of step S503, reference may be made to the optional implementation of step S209 in FIG. 2, and other related parts in the embodiments involved in FIG. 2, which will not be repeated here.

In some embodiments, the third core network device 1033 may send the third information to a fourth core network device 1034 or other entities/devices, which is not limited herein.

In some embodiments, the third information may be used by the fourth core network device 1034 to map a multiplexed data flow.

In step S504, the response message is obtained.

For an optional implementation of step S504, reference may be made to the optional implementation of step S211 in FIG. 2, and other related parts in the embodiments involved in FIG. 2, which will not be repeated here.

In some embodiments, the third core network device 1033 may receive the response message sent by the fourth core network device 1034 or other entities/devices, which is not limited herein.

In step S505, fourth information is sent.

For an optional implementation of step S505, reference may be made to the optional implementation of step S212 in FIG. 2, and other related parts in the embodiments involved in FIG. 2, which will not be repeated here.

In some embodiments, the third core network device 1033 may send the fourth information to a fifth core network device 1035 or other entities/devices, which is not limited herein.

In step S506, fifth information is obtained.

For an optional implementation of step S506, reference may be made to the optional implementation of step S216 in FIG. 2, and other related parts in the embodiments involved in FIG. 2, which will not be repeated here.

In some embodiments, the third core network device 1033 may receive the fifth information sent by the fifth core network device 1035 or other entities/devices, which is not limited herein.

In step S507, the fifth information is sent.

For an optional implementation of step S507, reference may be made to the optional implementation of step S217 in FIG. 2, and other related parts in the embodiments involved in FIG. 2, which will not be repeated here.

In some embodiments, the third core network device 1033 may send the fifth information to the fourth core network device 1034 or other entities/devices, which is not limited herein.

The communication methods involved in the embodiments of the present disclosure may include at least one of steps S501 to S507. For example, step S501 may be implemented as an independent embodiment. For example, step S503 may be implemented as an independent embodiment. For example, a combination of steps S501 and S503 may be implemented as an independent embodiment. It should be noted that possible independent embodiments consisting of one or more of steps S501 to S507 are not limited herein.

In some embodiments, steps S502 to S507 are optional, and one or more of these steps may be omitted or substituted in different embodiments.

In some embodiments, steps S501, S502, and S504 to S507 are optional, and one or more of these steps may be omitted or substituted in different embodiments.

FIG. 6 is a flowchart illustrating a communication method according to an embodiment of the present disclosure. The embodiments of the present disclosure relate to the communication method. The communication method is performed by a fourth core network device 1034. As illustrated in FIG. 6, the above method includes the following steps S601 to S604.

In step S601, third information is obtained.

For an optional implementation of step S601, reference may be made to the optional implementation of step S209 in FIG. 2, and other related parts in the embodiments involved in FIG. 2, which will not be repeated here.

In some embodiments, the fourth core network device 1034 may receive the third information sent by a third core network device 1033 or other entities/devices, which is not limited herein.

In some embodiments, the fourth core network device 1034 may obtain the third information specified by a protocol.

In some embodiments, the fourth core network device 1034 may obtain the third information from an upper layer.

In some embodiments, the fourth core network device 1034 may obtain the third information by processing information.

In step S602, a mapping of a multiplexed data flow is determined.

For an optional implementation of step S602, reference may be made to the optional implementation of step S210 in FIG. 2, and other related parts in the embodiments involved in FIG. 2, which will not be repeated here.

In step S603, a response message is sent.

For an optional implementation of step S603, reference may be made to the optional implementation of step S211 in FIG. 2, and other related parts in the embodiments involved in FIG. 2, which will not be repeated here.

In some embodiments, the fourth core network device 1034 may send the response message to the third core network device 1033 or other entities/devices, which is not limited herein.

In step S604, fifth information is obtained.

For an optional implementation of step S604, reference may be made to the optional implementation of step S217 in FIG. 2, and other related parts in the embodiments involved in FIG. 2, which will not be repeated here.

In some embodiments, the fourth core network device 1034 may receive the fifth information sent by the third core network device 1033 or other entities/devices, which is not limited herein.

The communication methods involved in the embodiments of the present disclosure may include at least one of steps S601 to S604. For example, step S601 may be implemented as an independent embodiment. For example, step S602 may be implemented as an independent embodiment. For example, a combination of steps S601 and S602 may be implemented as an independent embodiment. It should be noted that possible independent embodiments consisting of one or more of steps S601 to S604 are not limited herein.

In some embodiments, steps S602, S603, and S604 are optional, and one or more of these steps may be omitted or substituted in different embodiments.

In some embodiments, steps S601, S603, and S604 are optional, and one or more of these steps may be omitted or substituted in different embodiments.

FIG. 7 is a schematic interaction diagram illustrating a communication method according to an embodiment of the present disclosure. As illustrated in FIG. 7, embodiments of the present disclosure relate to the communication method. The above communication method includes the following step S701.

In step S701, a second core network device 1032 sends first information to a core network device 103.

For an optional implementation of step S701, reference may be made to the optional implementation of step S201 in FIG. 2, and other related parts in the embodiments involved in FIG. 2, which will not be repeated here.

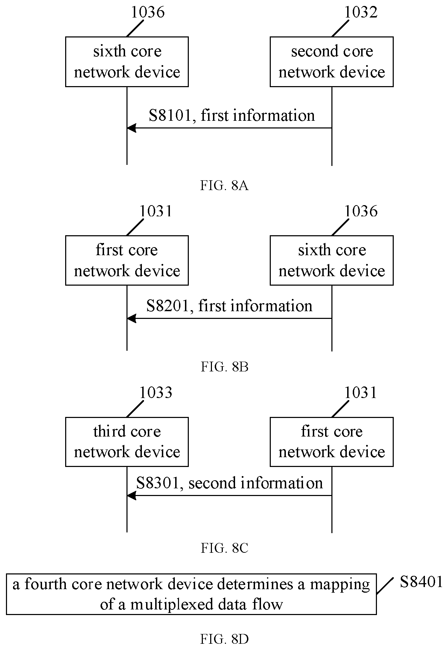

FIG. 8A is a schematic interaction diagram illustrating a communication method according to an embodiment of the present disclosure. As illustrated in FIG. 8A, embodiments of the present disclosure relate to the communication method. The above communication method includes the following step S8101.

In step S8101, a second core network device 1032 sends first information to a sixth core network device 1036.

For an optional implementation of step S8101, reference may be made to the optional implementation of step S201 in FIG. 2 and other related parts in the embodiments involved in FIG. 2, which will not be repeated here.

FIG. 8B is a schematic interaction diagram illustrating a communication method according to an embodiment of the present disclosure. As illustrated in FIG. 8B, embodiments of the present disclosure relate to the communication method. The above communication method includes the following step S8201.

In step S8201, a sixth core network device 1036 sends first information to a first core network device 1031.

For an optional implementation of step S8201, reference may be made to the optional implementation of step S203 in FIG. 2, and other related parts in the embodiments involved in FIG. 2, which will not be repeated here.

FIG. 8C is a schematic interaction diagram illustrating a communication method according to an embodiment of the present disclosure. As illustrated in FIG. 8C, embodiments of the present disclosure relate to the communication method. The above communication method includes the following step S8301.

In step S8301, a first core network device 1031 sends second information to a third core network device 1033.

For an optional implementation of step S8301, reference may be made to the optional implementation of step S207 in FIG. 2, and other related parts in the embodiments involved in FIG. 2, which will not be repeated here.

FIG. 8D is a flowchart illustrating a communication method according to an embodiment of the present disclosure. As illustrated in FIG. 8D, embodiments of the present disclosure relate to the communication method. The above communication method includes the following step S8401.

In step S8401, a fourth core network device 1034 determines a mapping of a multiplexed data flow.

For an optional implementation of step S8401, reference may be made to the optional implementation of step S210 in FIG. 2, and other related parts in the embodiments involved in FIG. 2, which will not be repeated here.

The embodiments of the present disclosure will be described by way of the following example.

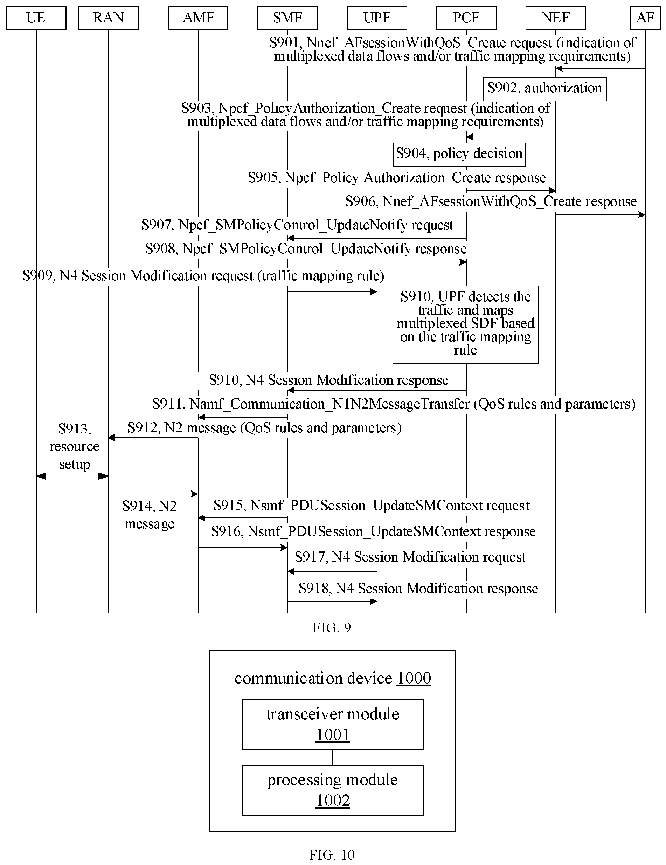

FIG. 9 is a schematic interaction diagram illustrating an illustrative implementation of a communication method according to an embodiment of the present disclosure. As illustrated in FIG. 9, the communication method of the embodiments of the present disclosure may include the following steps S901 to S918.

In step S901, the AF (i.e., the above second core network device) sends an AF session resource request, for example, by creating an AF request via an Nnef_AFsessionWithQoS_Create request. The AF carries QoS requirements for an XRM service and interactive media service data flow in a request message.

In some embodiments, the AF sends indication of multiplexed data flows (i.e., the above indication information), and/or traffic mapping requirements (i.e., the above requirement information), and/or a protocol description to a 5GC (NEF/PCF).

In some embodiments, the indication of multiplexed data flows is configured to indicate whether media streams are multiplexed.

In some embodiments, the traffic mapping requirements indicate mapping requirements for one or more corresponding multiplexed data flows, which are used by a PCF to generate a traffic mapping policy rule.

In some embodiments, the traffic mapping requirements may include:
(1) a mapping type including, for example, one-to-one, one-to-many, many-to-one, and many-to-many;
(2) a mapping descriptor, which may be a media type (e.g., audio/video), stream dependent (e.g., the sub-stream which depends on the multiplexed stream), channel dependent (e.g., one or several channels of the audio), layer dependent (e.g., one or more layers of the video), synchronization dependent (e.g., streams with synchronization requirements or similar delay requirements); and
(3) a mapping precedence: determining the order the mapping requirements/mapping type/mapping descriptor is enforced.

In some embodiments, a protocol description or traffic detection information provides information such as a protocol type, a codec type, and a media type.

In some embodiments, the AF may send the information to the NEF/PCF during an AF QoS request/update procedure.

In some embodiments, XRM service (i.e., the above first service) information may be carried, identifying an XRM service data flow or data flow group (e.g., a multi-modal service ID), a UE address/UE identifier, an AF identifier, an application ID, flow description(s), a DNN, an S-NSSAI, QoS parameters and other corresponding information. The multi-modal service ID here may be configured to identify all flows in an XRM service group.

In step S902, the NEF (i.e., the above sixth core network device) authorizes the AF request. In a case that it is an untrusted AF, the AF request is sent to the PCF via the NEF. (Optionally, the NEF performs relevant mappings, including a mapping of identifying an XRM service (an AF service identifier) to the DNN and S-NSSAI, a mapping of an external application to a CN application identifier; and a mapping (such as SUPI) of an external UE identifier to a UE identifier within the CN based on UDM subscription information, and a mapping of external to internal XRM service group identifiers based on the UDM subscription information).

In step S903, the NEF authorizes the AF request and determines whether to invoke the TSCTSF or to directly contact the PCF depending on the parameters provided by the AF. (These signaling steps are the same as for setting up an AF session with required QoS procedure). The PCF receives attributes provided by the AF from the NEF or TSCTSF. The NEF triggers Npcf_PolicyAuthorization_Create request, and sends the AF request to the PCF, carrying QoS requirement information for the PCF (i.e., the above first core network device) to make a policy decision. The message carries the indication of multiplexed data flows and/or traffic mapping requirements of a corresponding SDF.

In step S904, the PCF makes the policy decision. The PCF may determine that the updated or new policy information needs to be sent to the SMF (i.e., the above third core network device).

In some embodiments, the PCF determines a PCC rule (including the traffic mapping policy rule (i.e., the above first rule)) after considering the indication of multiplexed data flows and/or traffic mapping requirements, which is provided by the AF.

In some embodiments, the PCF sends the traffic mapping policy rule to the SMF via PCC rules.

In some embodiments, for the form and content of the traffic mapping policy rule, reference may be made to Table 1 below.

**Table 1: Traffic Mapping Policy Rule**

| Information name | description |
|---|---|
| mapping precedence | determines the order that mapping requirements/mapping type/mapping descriptor is enforced (which may be used per rule or per mapping descriptor) |
| mapping type | indicates the mapping mode, for example, 1-to-n, n-to-1, and m-to-n (m and n being greater than 1) |
| mapping descriptor | This part defines the mapping descriptor components for the traffic mapping policy rule |
| media type | mapping considering the media type, for example, used for all the audio/video type streams |
| media format | mapping considering the media format, for example, media format sub-field of the media announcement and all other parameter information associated with the media format |
| stream dependent | mapping considering the stream dependent, for example, used for the sub-stream(s) which dependent on the multiplexed stream |
| channel dependent | mapping considering the channel dependent, for example, used for the streams of one or several channels of the audio |
| layer dependent | mapping considering the layer dependent, for example, used for the streams of one |
| | or several layers of the video |
| synchronization dependent stream importance | mapping considering the synchronization dependent, for example, used for the streams with synchronization requirements or similar delay requirements mapping considering the stream importance, for example, used for the sub-stream(s) and the multiplexed stream(s) which has the relative importance indicated |
| channel importance | mapping considering the channel importance, for example, used for the streams of one or several channels of the audio, which has the relative importance indicated |
| layer importance | mapping considering the layer importance, for example, used for the streams of one or several layers of the video, which has the relative importance indicated |

In step S905, the PCF responds to the NEF Npcf_Policy Authorization_Create response.

In step S906, the NEF sends an Nnef_AFsessionWithQoS_Create response message to the AF, which carries an authorization result to indicate whether the request is authorized.

In step S907, the PCF initiates an SM Policy Association Modification request to the SMF, which carries the PCC rule.

In some embodiments, upon reception of the PCC rule (including the traffic mapping policy rule (i.e., the above second rule)), the SMF determines QoS rules (including the traffic mapping policy rule) and QoS set parameters to configure/or active the traffic mapping policy rule to the UPF (i.e., the above fourth core network device) (e.g., via the N4 session).

In some embodiments, the SMF may derive the traffic mapping policy rule, considering the indication of multiplexed data flows and/or traffic mapping requirements, which is provided by the PCF/AF.

In step S908, the SMF replies an SM Policy Association Modification response to the PCF.

In step S909, the SMF initiates an N4 Session Modification request to the UPF, which includes the traffic mapping policy rule.

In step S910, the UPF responds to the SMF.

In some embodiments, the UPF detects the traffic and maps the multiplexed data flows within a single end-to-end transport connection into one or several QoS flows based on the traffic mapping policy rule (provided by the SMF or pre-configured locally).

In step S911, for the SMF requested modification, the SMF invokes Namf_Communication _N1N2MessageTransfer (N2 SM information (PDU session ID, QFI(s), QoS profile(s), N1 SM container)).

In step S912, the AMF (i.e., the above fifth core network device) may send an N2 message (the N2 SM information received from the SMF, an NAS message (the PDU session ID, the N1 SM container (a PDU session modification command))) to the (R)AN (i.e., the above access network device).

In step S914, the (R)AN may acknowledge an N2 PDU session request by sending an N2 PDU Session Ack message to the AMF.

In step S915, the AMF forwards the N2 SM information from the AN to the SMF via an Nsmf_PDUSession_UpdateSMContext service operation.

In step S916, the SMF replies with an Nsmf_PDUSession_UpdateSMContext response.

In steps S917 and S918, the SMF may update the N4 session of the UPF(s) involved by the PDU session modification by sending the N4 Session Modification request to the UPF.

In the embodiments of the present disclosure, some or all of steps and their optional implementations may be arbitrarily combined with some or all of steps in other embodiments, and may also be arbitrarily combined with optional implementations of other embodiments.

The embodiments of the present disclosure also provide a communication apparatus for implementing any one of the above methods. For example, embodiments of the present disclosure also provide another communication apparatus, including units or modules for implementing steps performed by the network device in any one of the above methods. For example, embodiments of the present disclosure also provide another communication apparatus, including units or modules for implementing steps performed by the terminal in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of a processor calling software. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be implemented via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large amount of logic gate circuits, and connection relationships among the logic gate circuits are configured by configuration files to implement the functions of some or all of the units or modules. All units or modules of the above apparatus may be fully implemented in the form of the processor calling the software, or fully implemented in a form of the hardware circuit, or partially implemented in the form of the processor calling the software and the remaining part implemented in the form of the hardware circuit.

In the embodiments of the present disclosure, the processor is a circuit with a signal processing capability. In an implementation, the processor may be a circuit with a capability of reading and running instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, such as, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 10 is a block diagram illustrating a communication device according to an embodiment of the present disclosure. As illustrated in FIG. 10, the communication device 1000 may include at least one of: a transceiver module 1001 or a processing module 1002.

In some embodiments, the communication device 1000 may be a first core network device 1031. In some embodiments, the transceiver module 1001 may be configured to obtain first information, in which the first information is configured to request to determine a first rule, and the first rule is configured for traffic mapping of a multiplexed data flow of a first service. Optionally, the transceiver module 1001 may be configured to perform at least one of the communication steps such as sending and/or receiving (e.g., steps S203, S205, S207, S208) performed by the first core network device 1031 in any one of the above methods, which will not be repeated here. Optionally, the processing module 1002 may be configured to perform at least one of other steps (e.g., step S204) other than the communication steps such as sending and/or receiving performed by the first core network device 1031 in any one of the above methods, which will not be repeated here.

In some embodiments, the communication device 1000 may be a second core network device 1032. In some embodiments, the transceiver module 1001 may be configured to send first information, in which the first information is configured to request to determine a first rule, and the first rule is configured for traffic mapping of a multiplexed data flow of a first service. Optionally, the transceiver module 1001 may be configured to perform at least one of the communication steps such as sending and/or receiving (e.g., step S201) performed by the second core network device 1032 in any one of the above methods, which will not be repeated here.

In some embodiments, the communication device 1000 may be a third core network device 1033. In some embodiments, the transceiver module 1001 may be configured to receive second information, in which the second information includes one of: a first rule, in which the first rule is configured for traffic mapping of a multiplexed data flow of a first service; or at least one of indication information or requirement information, in which the indication information indicates whether to use the multiplexed data flow, and the requirement information indicates a mapping requirement for the multiplexed data flow. Optionally, the transceiver module 1001 may be configured to perform at least one of the communication steps such as sending and/or receiving (e.g., steps S207, S208, S209, S211, S212, S216, S217) performed by the third core network device 1033 in any one of the above methods, which will not be repeated here.

In some embodiments, the communication device 1000 may be a fourth core network device 1034. In some embodiments, the processing module 1002 may be configured to determine, according to a second rule, a mapping of a multiplexed data flow of a first service to a QoS flow, in which the second rule is configured for traffic mapping of the multiplexed data flow. Optionally, the transceiver module 1001 may be configured to perform at least one of the communication steps such as sending and/or receiving (e.g., steps S209, S211, S217) performed by the fourth core network device 1034 in any one of the above methods, which will not be repeated here. Optionally, the processing module 1002 may be configured to perform at least one of other steps (e.g., step S210) other than the communication steps such as sending and/or receiving performed by the fourth core network device 1034 in any one of the above methods, which will not be repeated here.

In some embodiments, the transceiver module may include a transmitting module and/or a receiving module. The transmitting module and the receiving module may be separate or integrated together. Optionally, the transceiver module may be interchanged with a transceiver.

In some embodiments, the processing module may be one module or may include multiple sub-modules. Optionally, the multiple sub-modules respectively execute all or some of the steps required to be performed by the processing module. Optionally, the processing module may be interchanged with a processor.

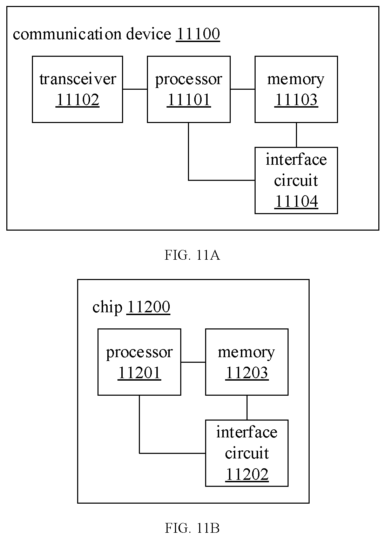

FIG. 11A is a block diagram illustrating a communication device according to an embodiment of the present disclosure. The communication device 11100 may be a network device (such as an access network device, a core network device, etc.), may also be a terminal (such as a UE, etc.), and may also be a chip, a chip system, or a processor, etc., that supports the network device to implement any one of the above methods, or a chip, a chip system, or a processor, etc., that supports the terminal to implement any one of the above methods, etc. The communication device 11100 may be configured to implement the method in the above method embodiments. For details, reference may be made to the description in the above method embodiments.

As illustrated in FIG. 11A, the communication device 11100 may include one or more processors 11101. The processor 11101 may be a general-purpose processor or a special-purpose processor. For example, the processor 11101 may be a baseband processor or a central processing unit. The baseband processor may be configured to process communication protocols and communication data, and the central processing unit may be configured to control communication devices (such as base stations, baseband chips, terminals, terminal chips, DU or CU, etc.) to perform computer programs and process computer program data. Optionally, the communication device 11100 is configured to perform any one of the above methods. Optionally, one or more processors 11101 may be configured to invoke instructions to cause the communication device 11100 to perform any one of the above methods.

In some embodiments, the communication device 11100 also includes one or more transceivers 11102. When the communication device 11100 includes one or more transceivers 11102, the transceiver 11102 performs at least one of the communication steps such as sending and/or receiving (e.g., steps S201, S203, S205, S206, S207, S208, S209, S211, S212, S213, S214, S215, S216, S217, but not limited herein) in the above method, and the processor 11101 performs at least one of other steps (e.g., steps S202, S204, S210, but not limited herein). In an alternative embodiment, the transceiver may include a receiver and/or a sender. The receiver and/or the sender may be separate or integrated together. Optionally, the terms such as transceiver, transceiving unit, transceiving machine, transceiving circuit, interface circuit, interface, etc. may be used interchangeably; the terms such as sender, sending unit, sending machine, and sending circuit may be used interchangeably; and the terms such as receiver, receiving unit, receiving machine, and receiving circuit may be used interchangeably.

In some embodiments, the communication device 11100 further includes one or more memories 11103 for storing data. Optionally, all or some of the memories 11103 may also be located outside the communication device 11100. In an alternative embodiment, the communication device 11100 may include one or more interface circuits 11104. Optionally, the interface circuit 11104 is connected to the memory 11103. The interface circuit 11104 may be configured to receive data from the memory 11103 or other devices, and may be configured to send data to the memory 11103 or other devices. For example, the interface circuit 11104 may read data stored in the memory 11103 and send the data to the processor 11101.

The communication device 11100 in the description of the above embodiments may be a network device or a terminal, but the scope of the communication device 11100 described in the present disclosure is not limited herein, and the structure of the communication device 11100 may not be limited by FIG. 11A. The communication device may be a stand-alone device or may be part of a larger device. For example, the communication device may be: (1) a stand-alone IC, a chip, a chip system or a subsystem; (2) a collection of ICs including one or more ICs, optionally, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 11B is a block diagram illustrating a chip according to an embodiment of the present disclosure. For a case that the communication device 11100 may be a chip or a chip system, reference may be made to the block diagram of the chip 11200 illustrated in FIG. 11B, which is not limited herein.

The chip 11200 includes one or more processors 11201. The chip 11200 is configured to perform any one of the above methods.

In some embodiments, the chip 11200 also includes one or more interface circuits 11202. Optionally, the terms such as interface circuit, interface, and transceiver pin, etc. may be used interchangeably. In some embodiments, the chip 11200 also includes one or more memories 11203 for storing data. Optionally, all or some of the memories 11203 may be located outside of the chip 11200. Optionally, the interface circuit 11202 is connected to the memory 11203. The interface circuit 11202 may be configured to receive data from the memory 11203 or other devices, and the interface circuit 11202 may be configured to send data to the memory 11203 or other devices. For example, the interface circuit 11202 may read data stored in the memory 11203 and send the data to the processor 11201.

In some embodiments, the interface circuit 11202 performs at least one of the communication steps such as sending and/or receiving (e.g., steps S201, S203, S205, S206, S207, S208, S209, S211, S212, S213, S214, S215, S216, S217, but not limited herein) in the above method. The interface circuit 11202 performs the communication steps such as sending and/or receiving in the above method, for example, meaning that the interface circuit 11202 performs a data interaction between the processor 11201, the chip 11200, the memory 11203 or the transceiver device. In some embodiments, the processor 11201 performs at least one of other steps (e.g., steps S202, S204, S210, but not limited herein).

The modules and/or devices described in the various embodiments, such as virtual devices, physical devices, and chips, may be combined or separated arbitrarily as needed. Optionally, some or all of steps may be performed collaboratively by a plurality of modules and/or devices, which is not limited herein.

The embodiments of the present disclosure also provide a storage medium for storing instructions. When the instructions are run on the communication device 11100, the communication device 11100 is caused to perform any one of the above methods. Optionally, the storage medium is an electronic storage medium. Optionally, the storage medium is a computer-readable storage medium, but is not limited herein, and may also be a storage medium readable by other devices. Optionally, the storage medium may be a non-transitory storage medium, but is not limited herein, and may also be a transitory storage medium.

The embodiments of the present disclosure also provide a program product. When the program product is executed by the communication device 11100, the communication device 11100 is caused to perform any one of the above methods. Optionally, the program product is a computer program product.

The embodiments of the present disclosure also provide a computer program. When the computer program is executed on a computer, the computer is caused to perform any one of the above methods.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A communication method, performed by a first core network device, comprising:
determining first information, wherein the first information is configured to request to determine a first rule, and the first rule is configured for traffic mapping of a multiplexed data flow of a first service.

2. The method according to claim 1, wherein determining the first information comprises at least one of:
receiving the first information sent by a second core network device;
receiving the first information sent by a seventh core network device;
determining the first information based on an operation and maintenance and management configuration of an operator; or
determining the first information according to a local configuration.

3. The method according to claim 1 or 2, wherein the first information comprises at least one of:
indication information, configured to indicate whether to use the multiplexed data flow; or
requirement information, configured to indicate a mapping requirement for the multiplexed data flow.

4. The method according to claim 3, wherein the requirement information comprises at least one of:
a mapping type;
a mapping descriptor; or
a mapping precedence.

5. The method according to claim 4, wherein the mapping type comprises at least one of:
one-to-one mapping;
one-to-many mapping;
many-to-one mapping; or
many-to-many mapping.

6. The method according to claim 4 or 5, wherein the mapping descriptor comprises at least one of:
a media type;
a stream dependency;
a channel dependency;
a layer dependency; or
a synchronization dependency.

7. The method according to any one of claims 4 to 6, wherein the mapping precedence comprises at least one of:
a mapping requirement precedence;
a mapping type precedence; or
a mapping descriptor precedence.

8. The method according to any one of claims 1 to 7, further comprising:
sending second information to a third core network device;
wherein the second information comprises at least one of:
the first rule;
indication information, configured to indicate whether to use the multiplexed data flow; or
requirement information, configured to indicate a mapping requirement for the multiplexed data flow.

9. The method according to claim 8, further comprising:
determining the first rule according to the indication information and/or the requirement information.

10. The method according to any one of claims 1 to 9, further comprising:
sending the first information to a seventh core network device.

11. A communication method, performed by a second core network device, comprising:
sending first information to a first core network device, wherein the first information is configured to request to determine a first rule, and the first rule is configured for traffic mapping of a multiplexed data flow of a first service.

12. The method according to claim 11, wherein the first information comprises at least one of:
indication information, configured to indicate whether to use the multiplexed data flow; or
requirement information, configured to indicate a mapping requirement for the multiplexed data flow.

13. The method according to claim 12, wherein the requirement information comprises at least one of:
a mapping type;
a mapping descriptor; or
a mapping precedence.

14. The method according to claim 13, wherein the mapping type comprises at least one of:
one-to-one mapping;
one-to-many mapping;
many-to-one mapping; or
many-to-many mapping.

15. The method according to claim 13 or 14, wherein the mapping descriptor comprises at least one of:
a media type;
a stream dependency;
a channel dependency;
a layer dependency; or
a synchronization dependency.

16. The method according to any one of claims 13 to 15, wherein the mapping precedence comprises at least one of:
a mapping requirement precedence;
a mapping type precedence; or
a mapping descriptor precedence.

17. A communication method, performed by a third core network device, comprising:
receiving second information sent by a first core network device, wherein the second information comprises at least one of:
a first rule, configured for traffic mapping of a multiplexed data flow of a first service;
indication information, configured to indicate whether to use the multiplexed data flow; or
requirement information, configured to indicate a mapping requirement for the multiplexed data flow.

18. The method according to claim 17, wherein the requirement information comprises at least one of:
a mapping type;
a mapping descriptor; or
a mapping precedence.

19. The method according to claim 18, wherein the mapping type comprises at least one of:
one-to-one mapping;
one-to-many mapping;
many-to-one mapping; or
many-to-many mapping.

20. The method according to claim 18 or 19, wherein the mapping descriptor comprises at least one of:
a media type;
a stream dependency;
a channel dependency;
a layer dependency; or
a synchronization dependency.

21. The method according to any one of claims 18 to 20, wherein the mapping precedence comprises at least one of:
a mapping requirement precedence;
a mapping type precedence; or
a mapping descriptor precedence.

22. The method according to claim 17, wherein the first rule is determined based on at least one of the indication information or the requirement information.

23. The method according to any one of claims 17 to 22, further comprising:
sending third information to a fourth core network device, wherein the third information comprises a second rule, and the second rule is configured for traffic mapping of the multiplexed data flow of the first service.

24. The method according to claim 23, wherein the second rule is determined according to one of:
the first rule; or
the indication information and/or the requirement information.

25. A communication method, performed by a fourth core network device, comprising:
determining, according to a second rule, a mapping of a multiplexed data flow of a first service to a quality of service (QoS) flow, wherein the second rule is configured for traffic mapping of the multiplexed data flow.

26. The method according to claim 25, further comprising:
receiving third information sent by a third core network device, wherein the third information comprises the second rule, and the second rule is configured for traffic mapping of the multiplexed data flow of the first service.

27. The method according to claim 26, wherein the second rule is locally configured.

28. A communication method, performed by a core network, wherein the core network comprises a first core network device and a third core network device; and the method comprises:
sending, by the first core network device, second information to the third core network device, wherein the second information comprises at least one of:
a first rule, configured for traffic mapping of a multiplexed data flow of a first service;
indication information, configured to indicate whether to use the multiplexed data flow; or
requirement information, configured to indicate a mapping requirement for the multiplexed data flow.

29. A first core network device, comprising:
a transceiver module, configured to obtain first information, wherein the first information is configured to request to determine a first rule, and the first rule is configured for traffic mapping of a multiplexed data flow of a first service.

30. A second core network device, comprising:
a transceiver module, configured to send first information, wherein the first information is configured to request to determine a first rule, and the first rule is configured for traffic mapping of a multiplexed data flow of a first service.

31. A third core network device, comprising:
a transceiver module, configured to receive second information, wherein the second information comprises at least one of:
a first rule, configured for traffic mapping of a multiplexed data flow of a first service;
indication information, configured to indicate whether to use the multiplexed data flow; or
requirement information, configured to indicate a mapping requirement for the multiplexed data flow.

32. A fourth core network device, comprising:
a processing module, configured to determine, according to a second rule, a mapping of a multiplexed data flow of a first service to a quality of service (QoS) flow, wherein the second rule is configured for traffic mapping of the multiplexed data flow.

33. A communication apparatus, comprising:
one or more processors; and
a memory storing instructions;
wherein the instructions, when executed by the communication apparatus, cause the communication apparatus to implement the communication method according to any one of claims 1 to 10.

34. A communication apparatus, comprising:
one or more processors; and
a memory storing instructions;
wherein the instructions, when executed by the communication apparatus, cause the communication apparatus to implement the communication method according to any one of claims **11** to 16.

35. A communication apparatus, comprising:
one or more processors; and
a memory storing instructions;
wherein the instructions, when executed by the communication apparatus, cause the communication apparatus to implement the communication method according to any one of claims 17 to 24.

36. A communication apparatus, comprising:
one or more processors; and
a memory storing instructions;
wherein the instructions, when executed by the communication apparatus, cause the communication apparatus to implement the communication method according to any one of claims 25 to 27.

37. A communication apparatus, comprising:
one or more processors; and
a memory storing instructions;
wherein the instructions, when executed by the communication apparatus, cause the communication apparatus to implement the communication method according to claim 28.

38. A communication system, comprising: a first core network device and a second core network device;
wherein the first core network device is configured to implement the communication method according to any one of claims 1 to 10; and
the second core network device is configured to implement the communication method according to any one of claims 11 to 16.

39. The communication system according to claim 38, further comprising at least one of: a third core network device or a fourth core network device;
wherein the third core network device is configured to implement the communication method according to any one of claims 17 to 24; and
the fourth core network device is configured to implement the communication method according to any one of claims 25 to 27.

40. The communication system according to claim 38 or 39, further comprising at least one of: a fifth core network device, a sixth core network device, or a seventh core network device;
wherein the fifth core network device is configured to send fourth information, and the fourth information indicates quality of service (QoS) related information;
the sixth core network device is configured to send first information from the second core network device to the first core network device; and
the seventh core network device is configured to send the first information to the first core network device.

41. A storage medium, storing instructions that, when run on a communication device, cause the communication device to implement at least one of:
the communication method according to any one of claims 1 to 10;
the communication method according to any one of claims 11 to 16;
the communication method according to any one of claims 17 to 24;
the communication method according to any one of claims 25 to 27; or
the communication method according to claim 28.
